# EUROPEAN PATENT SPECIFICATION

(11) **EP 1 962 030 B1**
(45) Date of publication and mention of the grant of the patent: **12.03.2014**
(21) Application number: 06745766.3
(22) Date of filing: 27.04.2006
(51) Int. Cl.: F24F 7/08, F24F 1/00

(54) **HEAT EXCHANGE TYPE VENTILATOR**
WÄRMEAUSTAUSCHVENTILATOR
VENTILATEUR DU TYPE ECHANGEUR DE CHALEUR

(30) Priority: 14.12.2005 JP 2005359953; 20.12.2005 JP 2005366073; 20.12.2005 JP 2005366074
(43) Date of publication of application: 27.08.2008
(73) Proprietor: Panasonic Corporation, Kadoma-shi Osaka 571-8501 (JP)
(72) Inventor: ORITO, Shinobu, 7F Twin 21 OBP Panasonic Tower 2-1-61, Shiromi Chuo-ku, Osaka-shi Osaka 540-6207 (JP); FUJISAWA, Hideyuki, 7F Twin 21 OBP Panasonic Tower 2-1-61, Shiromi Chuo-ku, Osaka-shi Osaka 540-6207 (JP); YASUI, Nobuyuki, 7F Twin 21 OBP Panasonic Tower 2-1-61, Shiromi Chuo-ku, Osaka-shi Osaka 540-6207 (JP); TOUJYOU, Masayoshi, 7F Twin 21 OBP Panasonic Tower 2-1-61, Shiromi Chuo-ku, Osaka-shi Osaka 540-6207 (JP)
(74) Representative: Schwabe - Sandmair - Marx
(86) International application number: PCT/JP2006/308838
(87) International publication number: WO 2007/069349

(56) References cited:
- EP-A2- 0 816 769
- WO-A1-97/06390
- WO-A1-2005/057089
- WO-A1-2005/080882
- JP-A- 2000 337 693
- JP-A- 2005 233 494
- JP-U- 62 017 743
- JP-U- 63 190 837

## Description

### TECHNICAL FIELD

The present invention relates to a heat exchange type ventilator for use in a low-temperature region and the like, for example, and particularly relates to a heat exchange type ventilator that prevents the freeze of a heat exchange element.

### BACKGROUND ART

Conventionally, an antifreezer for a ventilator has been mounted on a heat exchange type ventilator (e.g., Unexamined Japanese Utility Model Publication No. S62-17743).

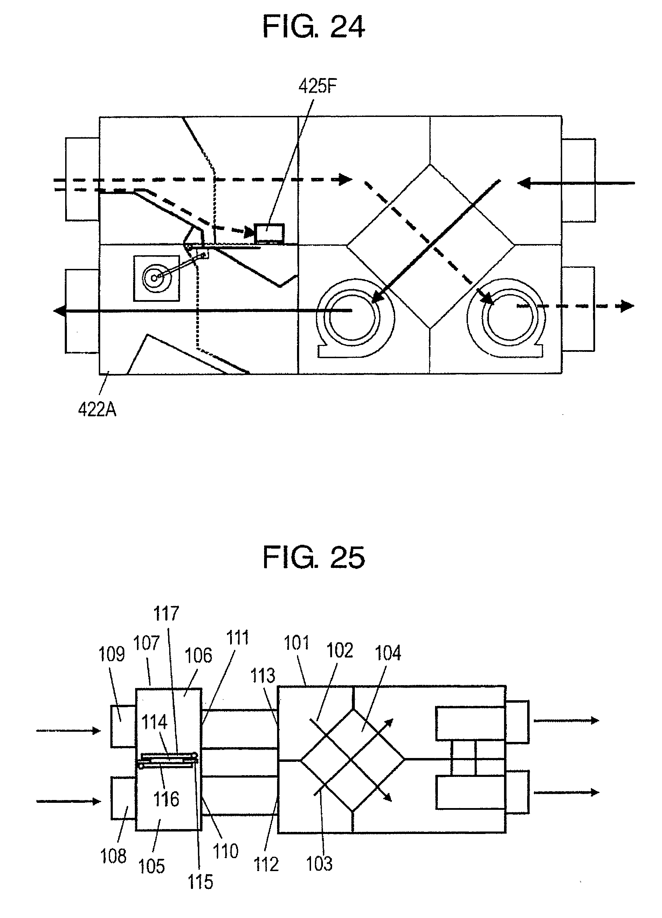

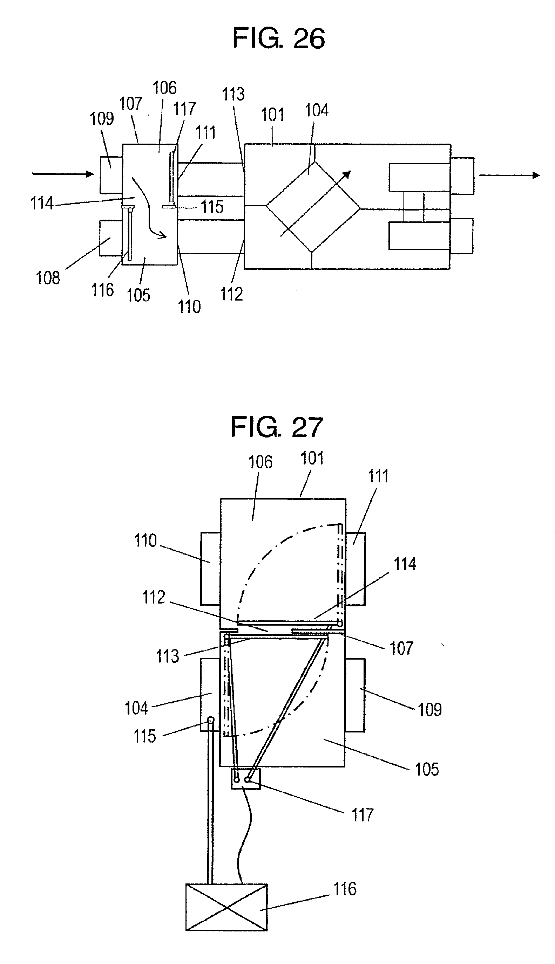

Hereinafter, with reference to FIGS. 25 and 26, the antifreezer for the ventilator is described. As shown in FIG. 25, exhaust flow path102 and air supply flow path 103 are formed inside of body 101 in such a manner as to intersect each other. Heat exchanger 104 is disposed in the intersection portion of these. Box body 107 in which low-temperature flow path105 and high-temperature flow path 106 are provided is arranged on a suction side of body 101 Low-temperature flow path inlet 108 and high-temperature flow path inlet 109 are provided on one side of box body 107, and low-temperature flow path outlet 110 and high-temperature flow path outlet 111 are provided on the other side, respectively. Low-temperature flow path outlet 110 is connected to suction port 112 of body 101 , and high-temperature flow path outlet 111 is connected to suction port 113 of the body, Partition wall 115 with an opening 114 is constructed so as to partition low-temperature flow path 105 and high-temperature flow-path 106, and communicate these two flow paths. There are provided damper 116 that is attached pivotally in low-temperature flow path 105 so as to open and close opening 114 and low-temperature flow path inlet 108 alternately, and damper 117 that is attached pivotally in high-temperature flow path 106 so as to open and close opening 114 and high-temperature flow path outlet 111 alternately, respectively. When a temperature of air flowing into low-temperature flow path inlet 108 from outdoor is low, so that ice formation occurs in heat exchanger 104, dampers 116 and 117 are rotated to open opening 114 and at the same time to close low-temperature flow path inlet 108 and high-temperature flow path outlet 111, so that the high-temperature air flowing from high-temperature flow path inlet 109 passes through heat exchanger 104 to melt the formed ice.

In such an antifreezer of the conventional ventilator, for dampers 116 and 117, a relatively larger opening and closing angle of 90 degrees must be prepared for opening and closing low-temperature flow path inlet 108, high-temperature flow path outlet 111 and opening 114. This causes a problem of increasing box body 107 in size, and thus, the downsizing of box body 107 has been desired.

Moreover, since when the formed ice in heat exchanger 104 is melted, the high-temperature air is passed in only one direction of heat exchanger 104, it takes long time to melt it. Therefore, it is required to melt the formed ice for a short time.

WO 2005/057089 A describes a freeze prevention device for a ventilator. The freeze prevention device for a ventilator is a ventilator supplying low-temperature air, sucked in from a low-temperature air suction opening, through a heat exchanger and discharging high-temperature air, sucked in from a high-temperature air suction opening, through the heat exchanger. A first opening and a first damper are arranged in a low-temperature air path connecting from the low-temperature air suction opening to the ventilator. A second opening and a second damper are arranged in a high-temperature air path connecting from the ventilator to a high-temperature air discharge opening. A bypass air path is provided, connecting from the first opening to the second opening. Since, as above, the air paths are constructed such that high-temperature air having passed through a heat exchange element is again returned to the heat exchange element, icing can be melted in a short time.

JP 2000 337693 A describes a wind path switching device which permits miniaturization of a driving machine. In this respect, a wind path switching device is provided with a wind path switching plate which is rotated by a driving machine, and which is rotatably pivoted to switch two branched ventilation paths from one to the other and vice versa. The wind path switching plate is constituted, so that it is held by a returning spring at a point where one ventilation path is closed normally and the other ventilation path is open normally, and that one ventilation path is closed by the rotation toward the leeward side of one ventilation path. When one ventilation path is closed, the wind path switching plate is initially rotated by the driving machine partway of switching. After that, it is rotated up to the closed point by the wind pressure by the blow of the ventilation path.

### SUMMARY OF THE INVENTION

The invention is defined by the subject-matter of the independent claim. The dependent claims are directed to advantageous embodiments.

### DISCLOSURE OF THE INVENTION

The present invention provides a heat exchange type ventilator in which a flow path switching unit can be downsized and a heat exchange device can be simplified, formed ice can be melted for a short time, and cost reduction can be achieved.

The heat exchange type ventilator of the present invention includes:
a ventilating unit provided with,
   (a) a heat exchanger that performs heat exchange between an exhaust flow path from indoor and an air supply flow from outdoor,
   (b) an air blower for exhaust that forms the exhaust flow, and
   (c) an air blower for air supply that forms the air supply flow, and a flow path switching unit provided with,
   (d) a partition plate that partitions into an exhaust flow path and an air supply flow path,
   (e) an exhaust damper receiver including an exhaust opening through which the exhaust flow passes and provided in the exhaust flow path,
   (f) an air supply damper receiver including an air supply opening through which the air supply flow passes and provided in air supply flow path,
   (g) an exhaust damper that opens and closes the exhaust opening, and
   (h) an air supply damper that opens and closes the air supply opening, the heat exchange type ventilator characterized by further including:
   (i) receiver-side bent portions provided in the vicinity of end portions of the exhaust damper receiver and the air supply damper receiver;
   (j) damper-side bent portions provided in the exhaust damper and the air supply damper so as to be bent along the receiver-side bent portions of the exhaust damper receiver and the air supply damper receiver.

With the above-described constitution, since particularly, the exhaust damper receiver, the air supply damper receiver, the exhaust damper and the air supply damper, each of which is bent and has a small width, can realize the larger exhaust opening and air supply opening, the downsizing of the flow path switching unit can be achieved. Moreover, even if a rotary angle of the exhaust damper and the air supply damper is set to be small, a problem that the exhaust damper and the air supply damper disturb the exhaust flow path and the air supply flow path can be eliminated.

Moreover, the heat exchange type ventilator of the present invention includes a circulating opening opened in the partition plate described in the above-described constitutional requirement (d), which is provided so as to communicate the exhaust flow path and the air supply flow path, and a circulating damper that opens and closes this circulating opening.

Also, in the three openings of the exhaust opening, the air supply opening and the circulating opening, the exhaust damper, the air supply damper, and the circulating damper are disposed, respectively. When formed ice of the heat exchanger is melted, the exhaust opening and the air supply opening are closed by the exhaust damper and the air supply damper. When the circulating damper is opened to open the circulating opening, on the ventilating unit side, warm indoor air passes through the ventilating path on one side of the heat exchanger. The warm indoor air warms the heat exchanger, and then, enters the air supply flow path from the circulating opening, passes through the ventilating path on the other side of the heat exchanger, and circulates indoors. In this manner, a circulating flow path is formed. According to the above-described constitution, the warm air passes through the heat exchanger twice, so that a melting time of the formed ice in the heat exchanger can be made shorter. Further, the sizes of the exhaust opening, the air supply opening and the circulating opening can be designed freely.

Moreover, the heat exchange type ventilator of the present invention is constituted so that the exhaust damper, the air supply damper and the circulating damper are integrated, and a rotary shaft constructed with the dampers integrated allows these dampers to be opened and closed simultaneously. Since this allows only one damper motor to be used, the downsizing and reduction in cost of the heat exchange type ventilator can be achieved.

Preferably, in the heat exchange type ventilator, the damper-side bent portions of the above-described constitutional requirement (j) are each bent in a direction where an air flow is guided. This makes the exhaust opening and the air supply opening larger, and a fitting state more favorable, realizes low pressure loss and low noise, and additionally, brings about a rectification effect.

Preferably, in the heat exchange type ventilator, the exhaust damper, the air supply damper and the circulating damper are constructed in the directions where the exhaust opening, the air supply opening, and the circulating opening are closed by air pressure of the exhaust flow and the air supply flow. This increases airtightness of the exhaust opening, the air supply opening, and the circulating opening, and the contact between the air supply flow and the exhaust flow can reduce the occurring dew condensation.

Preferably, in the heat exchange type ventilator, the damper motor driving the rotary shaft of the dampers that integrally opens and closes the exhaust damper, the air supply damper and the circulating damper is provided inside of the flow path switching unit. Since the maintenance can be performed from a lower surface side of the flow path switching unit, as compared with a case where the damper motor is provided outside, it is unnecessary to take large space for maintenance on the lower surface side, and, additionally, the downsizing of the flow path switching unit can be achieved.

Preferably, in the heat exchange type ventilator, both the damper motor and the rotary shaft of the dampers are provided inside of the exhaust flow path. According to such a constitution, a lever that connects and moves the respective rotary shafts of the damper motor and the dampers does not need to be penetrated through the partition plate, which partitions into the exhaust flow path and the air supply flow path, thereby improving sealing performance of the partition plate. Dew condensation resistance is improved, and the damper motor can be arranged in an environment at a nearly normal temperature. Additionally, this alleviates thermal limitation of the damper motor, thereby reducing the cost.

Preferably, in the heat exchange type ventilator, the damper motor is detachable from the exhaust damper, the air supply damper, and the circulating damper. Since only the damper motor needs to be detached at the time of maintenance of the heat exchange type ventilator, the maintenance work can be easily performed. By integrating the damper motor and the dampers, the dampers can be arranged so as to penetrate through the partition plate. This makes it unnecessary to divide the partition plate, which have been conventionally required for performing the maintenance of the dampers.

Preferably, the heat exchange type ventilator is constituted so that the opening and closing operations of the exhaust damper, the air supply damper and the circulating damper are performed by the damper motor itself. This can eliminate a problem that an opening and closing speeds of the dampers are not affected by air pressure, and prevent impact noise or the like. Additionally, as compared with a case where the returning of the opening and closing of the dampers is performed using a spring, the opening and closing operations can be surely performed without yielding to the air pressure.

Preferably, the heat exchange type ventilator is constituted so that the rotary shaft on the damper motor side and the rotary shaft on the damper side are connected by the lever, and the positions of the rotary shaft on the damper motor side and the rotary shaft on the damper side are shifted. By connecting the rotary shaft on the damper motor side and the rotary shaft of the damper by the lever, and rotating the rotary shaft on the damper motor side to reciprocate the lever and further rotate the rotary shaft on the damper side, an operation angle of the rotary shaft on the damper motor side and an operation angle of the dampers can be shifted. Operation ranges of the dampers can be set freely, thereby realizing the downsizing of the heat exchange type ventilator.

Preferably, in the heat exchange type ventilator, the damper motor is provided on a top surface side of the flow path switching unit. According to such a constitution, even if dew condensation ice occurs inside of the flow path switching unit, a problem that the dew condensation ice is accumulated in damper motor is eliminated, thereby improving the safety.

Preferably, in the heat exchange type ventilator, two limit switches are used, and the energization of the damper motor is stopped while the dampers are stopped. Energy saving effects can be exerted by stopping the energization, and longer life performance of the damper motor can be ensured.

Preferably, the heat exchange type ventilator is constituted so that a containing part of a controller and the like is projected inside of the flow path switching unit to serve as an air guide. According to such a constitution, since the containing part serves as the air guide, an effect of reducing ventilation resistance is exerted.

Another advantageous heat exchange type ventilator, not covered by the claims, includes:
a heat exchange device part including,
   (a1) a heat exchange element that performs heat exchange between indoor high-temperature air and outdoor low-temperature air, and
   (b1) an air blower that sends the high-temperature air outdoors and the low-temperature air indoors; and
an antifreezing part including,
   (c1) a low-temperature air path arranged on an outdoor side of the heat exchange device part and extending from a low-temperature air suction port to the heat exchange device part,
   (d1) a high-temperature air path extending from the heat exchange device part to a high-temperature air exhaust port,
   (e1) an opening through which the air passes the partition between the low-temperature air path and the high-temperature air path, and
   (f1) dampers having opening and closing functions of varying opening areas of the air paths in the low-temperature air suction port, the high-temperature air exhaust port, and the opening.

In the advantageous heat exchange type ventilator including the above-described constitutional requirements, by the opening and closing functions of the dampers of the above-described constitutional requirement (f1), the high-temperature air passing the heat exchange element is guided to the opening. The indoor high-temperature air is mixed into the low-temperature air, and again returns indoors. The low-temperature air suction port, the high-temperature air exhaust port, and the opening provided in the partition between the low-temperature air path and the high-temperature air path are opened moderately. Part of the high-temperature air exhausted from the heat exchange device part enters the low-temperature air path from the high-temperature air path through the opening provided in the partition between the low-temperature air path and the high-temperature air path, and is mixed into the low-temperature air sucked from the low-temperature air suction port to be mixed air, which is supplied to the heat exchange device part in a state where the temperature rises. Thereby, antifreezing of the heat exchange element can be achieved. Additionally, since the remaining high-temperature air that has been exhausted from the heat exchange device part is exhausted outdoors from the high-temperature air exhaust port, the ventilation can be constantly performed.

Moreover, the advantageous heat exchange type ventilator is constituted so that in accordance with a temperature of the low-temperature air sucked from the low-temperature air suction port, ventilating path areas of the low-temperature air suction port, the high-temperature air exhaust port, and the opening are adjusted by the dampers of the above-described constitutional requirement (f1). Based on the temperature of the low-temperature air sucked from the low-temperature air suction port, the opening degrees of the low-temperature air suction port, the high-temperature air exhaust port and the opening are adjusted. A maximum ventilation amount can be assured while constantly keeping the air supplied to the heat exchange device part at a temperature at which the heat exchange element is not frozen.

Moreover, the heat exchange type ventilator is constituted so that the at least two dampers that adjust the ventilating path areas of the low-temperature air suction port, the high-temperature air exhaust port and the opening are integrated to interlock the opening and closing functions. This can reduce motors driving the dampers in number, thereby achieving space saving and cost reduction.

Moreover, the heat exchange type ventilator is constituted so that the opening and the closing functions of the dampers are all independent of one another. The opening degrees can be adjusted finely in the low-temperature air suction port, the high-temperature air exhaust port and the opening, respectively.

The heat exchange type ventilator is constituted so that inflow of the low-temperature air from the low-temperature air suction port and the high-temperature air exhaust port is shut off by the dampers while the operation of the heat exchange device part is stopped. This can shut off the low-temperature air, clutter and noise intruding through the low-temperature air suction port and the high-temperature air exhaust port from outdoor while the operation of the heat exchange device part is stopped.

Moreover, the heat exchange type ventilator is constituted so that a filter is provided in the low-temperature air path. The purification of the contaminated outdoor low-temperature air sucked from the low-temperature air suction port and the contaminated indoor high-temperature air, which is exhausted from the heat exchange device part, passes through the opening provided in the partition between low-temperature air path and the high-temperature air path and enters the low-temperature air path from the high-temperature air path, can be performed.

Moreover, the heat exchange type ventilator is constituted so that the antifreezing part is provided on duct piping connecting the heat exchange device part to the outdoor. According to such a constitution, whether or not the heat exchange device part and the antifreezing part are integrated, installation of the device can be performed utilizing space for duct piping even under a roof where installation space is limited.

Moreover, in the heat exchange type ventilator, a fixture that fixes the heat exchange device part to the antifreezing part is fixed to the heat exchange device part, and the antifreezing part is fixed to the fixture. This makes it unnecessary to suspend the antifreezing part when it is fixed to the heat exchange device part, and post-fitting to the heat exchange device part suspended in advance is also enabled, thereby improving workability.

Moreover, the heat exchange type ventilator is constituted so that the fixture also serves as an air path component of the antifreezing part. When the antifreezing part is fixed to the heat exchange device part, parts can be reduced in number.

Moreover, another heat exchange type ventilator includes:
a ventilating unit provided with,
   (a2) a heat exchanger that performs heat exchange between an indoor exhaust flow and an air supply flow from outdoor, and
   (b2) an air blower for exhaust that forms the exhaust flow, and an air blower for air supply that forms the air supply flow; and
a flow path switching unit provided with,
   (c2) a partition plate that partitions into an exhaust flow path and an air supply flow path,
   (d2) an exhaust opening through which the exhaust flow passes,
   (e2) an exhaust damper receiver provided in the exhaust flow path,
   (f2) an air supply opening through which the air supply flow passes,
   (g2) an air supply damper receiver provided in the air supply flow path,
   (h2) an exhaust damper that opens and closes the exhaust opening,
   (i2) an air supply damper that opens and closes the air supply opening,
   (j2) a circulating opening that is opened in the partition plate so as to communicate the exhaust flow path and the air supply flow path,
   (k2) a circulating damper that opens and closes this circulating opening,
   (12) a damper motor that opens and closes the above-described respective dampers, and
   (m2) a sensor part that detects an air temperature and controls the opening and closing of the above-described respective dampers.

In the above-described advantageous constitution, the sensor part is provided in a position in the flow path switching unit where both the air supply flow and a circulating flow passing through the circulating opening contact together. According to such a constitution, two kinds of flows of the low-temperature air from outdoor and the high-temperature air from indoor directly abut against the sensor part. The sensor part senses a temperature of the air supply flow and a temperature of the circulating flow to open and close the respective dampers, which enables the switching between the introduction of the outdoor air and the circulation of the indoor air. Therefore, a timer or the like for switching between the introduction of the outdoor air and the circulation of the indoor air is unnecessary, thereby reducing the cost and simplifying an electric circuit.

Moreover, in the heat exchange type ventilator, the sensor part is formed of one temperature sensor. Two temperature sensors are generally required for sensing the temperatures of the two kinds of airflows. In contrast, since the one temperature sensor can sense the temperatures of the two kinds of airflows, the cost reduction and the simplification of the circuit can be achieved.

Moreover, in the heat exchange type ventilator, the sensor part is formed of a temperature sensor of a C contact, and the contact of the temperature sensor can be switched in accordance with a temperature of an abutting airflow.

The term "C contact" is obvious to those in the art. More specifically, the C contact has two switching functions of an A contact and a B contact in combination. The A contact is of a normally open type (N. O.), and the B contact is of a normally close type (N. C.). Accordingly, the C contact has the two functions of the normally open type and the normally close type.

Since in any case of the opening and closing of the respective dampers, the energization of the damper motor is enabled, utilizing driving force of the damper motor enables the opening and closing of the respective dampers. Therefore, as compared with a case where a spring or the like is utilized, the opening and closing can be surely performed without yielding to air pressure, and clutter and noise occurring when the dampers are opened and closed can be prevented. Also, since the opening and closing of the respective dampers can be performed using the one temperature sensor, the cost reduction and the simplification of the electric circuit can be achieved.

Moreover, in the heat exchange type ventilator, a periphery of the sensor part is encompassed by a heat insulating material. The adjustment of a reaction time of the sensor part depending on a type and a thickness of the heat insulating material enables the adjustment of sensitivity of the sensor part. Additionally, the opening and closing times of the dampers can be adjusted freely, and the installation of the timer or the like is unnecessary, thereby reducing the cost and simplifying the electric circuit.

Moreover, in the heat exchange type ventilator, an enclosure is provided so that the air supply flow does not directly contact the sensor part. The reaction time of the sensor part is shorter in the case where the air supply flow directly hits the sensor part, while it is longer in the case where the air supply flow does not directly hit it. By utilizing this property, the opening and closing times of the respective dampers can be adjusted freely. Additionally, the installation of the timer or the like is unnecessary, thereby reducing the cost and simplifying the electric circuit.

Moreover, in the heat exchange type ventilator, an enclosure is provided so that the circulating flow passing the circulating opening does not directly contact the sensor part. Since the reaction time of the sensor part is shorter in the case where the circulating flow directly hits the sensor part, while it is longer in the case where the circulating flow does not directly hit it, the opening and closing times of the respective dampers can be adjusted freely. Additionally, the installation of the timer or the like is unnecessary, thereby reducing the cost and simplifying the electric circuit.

In the heat exchange type ventilator, part of the circulating damper is formed so as to play a role of an enclosure of the sensor part. In a state where the circulating damper is closed, the enclosure is provided to the sensor part, so that the air supply flow does not directly hit the sensor part, and thus the reaction time of the sensor part becomes longer. This allows the opening and closing times of the respective dampers to be adjusted freely. Also, the installation of the timer or the like is unnecessary, thereby reducing the cost and simplifying the electric circuit.

In the heat exchange type ventilator, the sensor part is provided in the circulating damper. The position of the sensor part is adjusted to a place where the airflow directly hits the sensor part or to a place where the airflow does not directly hit the sensor part to provide the sensor part, which allows the reaction time of the sensor part to be adjusted. This allows the opening and closing times of the respective dampers to be adjusted freely. Additionally, the installation of the timer or the like is unnecessary, thereby reducing the cost and simplifying the electric circuit.

Moreover, in the heat exchange type ventilator, waterproof measures are applied to the sensor part. Since water is prevented from entering the sensor part, water can be prevented from intruding even if dew condensation water occurs, thereby enhancing the safety against the water.

### BRIEF DESCRIPTION OF THE DRAWINGS

FIG. 1 is a schematic cross-sectional diagram illustrating a state when a heat exchange type ventilator according to Embodiment 1 of the present invention is used.
FIG. 2 is a schematic cross-section diagram illustrating a state when formed ice is melted in a heat exchanger of the heat exchange type ventilator according to Embodiment 1 of the present invention.
FIG. 3 is a schematic perspective diagram illustrating an opening portion of the heat exchange type ventilator according to Embodiment 1 of the present invention.
FIG. 4 is a schematic cross-sectional diagram illustrating in an attachment state of a damper motor of the heat exchange type ventilator according to Embodiment 1 of the present invention.
FIG. 5 is an electric circuit diagram of the damper motor of the heat exchange type ventilator according to Embodiment 1 of the present invention.
FIG. 6 is a perspective diagram illustrating an antifreezing part structure of a heat exchange type ventilator according to Embodiment 2 of the present invention.
FIG. 7 is a bottom-side constitutional diagram of the heat exchange type ventilator according to Embodiment 2 of the present invention.
FIG. 8 is a bottom-side constitutional diagram of the heat exchange type ventilator according to Embodiment 2 of the present invention.
FIG. 9 is a bottom-side constitutional diagram of a heat exchange type ventilator according to Embodiment 3 of the present invention.
FIG. 10 is a bottom-side constitutional diagram of a heat exchange type ventilator according to Embodiment 4 of the present invention,
FIG. 11A is side surface-side and bottom-side constitutional diagrams of a heat exchange type ventilator according to Embodiment 5 of the present invention.
FIG. 11B is side surface-side and bottom-side constitutional diagrams of the heat exchange type ventilator according to Embodiment 5 of the present invention.
FIG. 12 is a perspective diagram of a heat exchange type ventilator according to Embodiment 6 of the present invention.
FIG. 13 is a schematic cross-sectional diagram illustrating a normal state of a heat exchange type ventilator according to Embodiment 7 of the present invention.
FIG. 14 is a schematic cross-sectional diagram illustrating a state when formed ice is melted in the heat exchange type ventilator according to Embodiment 7 of the present invention.
FIG. 15 is a perspective diagram of a flow path switching unit excluding dampers of the heat exchange type ventilator according to Embodiment 7 of the present invention.
FIG. 16 is a circuit diagram illustrating a relation between a temperature sensor and a damper motor of the heat exchange type ventilator according to Embodiment 7 of the present invention.
FIG. 17 is a perspective diagram of a sensor part of a heat exchange type ventilator according to Embodiment 8 of the present invention.
FIG. 18 is a schematic cross-sectional diagram illustrating a normal state of a heat exchange type ventilator according to Embodiment 9 of the present invention.
FIG. 19 is a schematic cross-sectional diagram illustrating a state when formed ice is melted in a heat exchange type ventilator according to Embodiment 10 of the present invention.
FIG. 20 is a schematic cross-sectional diagram illustrating a normal state of a heat exchange type ventilator according to Embodiment 11 of the present invention.
FIG. 21 is a schematic cross-sectional diagram illustrating a state when formed ice is melted in the heat exchange type ventilator according to Embodiment 11 of the present invention.
FIG. 22 is a schematic cross-sectional diagram illustrating a normal state of a heat exchange type ventilator according to Embodiment 12 of the present invention.
FIG. 23 is a schematic cross-sectional diagram illustrating a state when formed ice is melted in the heat exchange type ventilator according to Embodiment 12 of the present invention.
FIG. 24 is a schematic cross-sectional diagram illustrating a normal state of a heat exchange type ventilator according to Embodiment 13 of the present invention.
FIG. 25 is a constitutional diagram illustrating a normal ventilation state of an antifreezer of a conventional ventilator.
FIG. 26 is an operation explanatory diagram of the antifreezer of the conventional ventilator.
FIG. 27 is a constitutional diagram of a damper portion of the antifreezer of the conventional ventilator.

### REFERENCE MARKS IN THE DRAWINGS

- 201: indoor-side exhaust port
- 202: indoor-side air supply port
- 203: connection port for exhaust
- 204: connection port for air supply
- 205, 405: heat exchanger
- 206, 406: air blower for exhaust
- 207, 407: air blower for air supply
- 208, 408: ventilating unit
- 209, 409: exhaust flow path
- 210, 410: air supply flow path
- 211, 411: partition plate
- 212, 412: exhaust opening
- 213, 413: exhaust damper receiver
- 214, 414: air supply opening
- 215, 415: air supply damper receiver
- 216, 416: exhaust damper
- 217, 417: air supply damper
- 218, 418, 418A: circulating opening
- 219, 419, 419C, 419D: circulating damper
- 220, 420: outdoor-side exhaust port
- 221, 421: outdoor-side air supply port
- 222, 422: flow path switching unit
- 223: receiver-side bent portion
- 224: damper-side bent portion
- 225: rotary shaft on a damper side
- 226, 423: damper motor
- 227: rotary shaft on a damper motor side
- 228: lever
- 229: top surface
- 230: main switch
- 231, 426a: first limit switch
- 232, 426b: second limit switch
- 233: containing part
- 234: circulating flow path
- 301: high-temperature air
- 302: low-temperature air
- 303: air blower
- 304: heat exchange element
- 305: heat exchange device part
- 306: low-temperature air suction port
- 307: low-temperature air path
- 308: high-temperature air exhaust port
- 309: high-temperature air path
- 310: partition
- 311: opening
- 312: antifreezing part
- 313: temperature sensor
- 314, 315, 316: damper
- 317: filter
- 318: fixture
- 319: mixed air
- 320: duct piping
- 424, 424A: sensor part
- 425, 425B, 425C, 425D, 425E, 425F: temperature sensor
- 430: heat insulating material
- 431, 431A, 431B: enclosure

### PREFERRED EMBODIMENTS FOR CARRYING OUT OF THE INVENTION

Hereinafter, with reference to the drawings, embodiments of the present invention are described.

### (Embodiment 1)

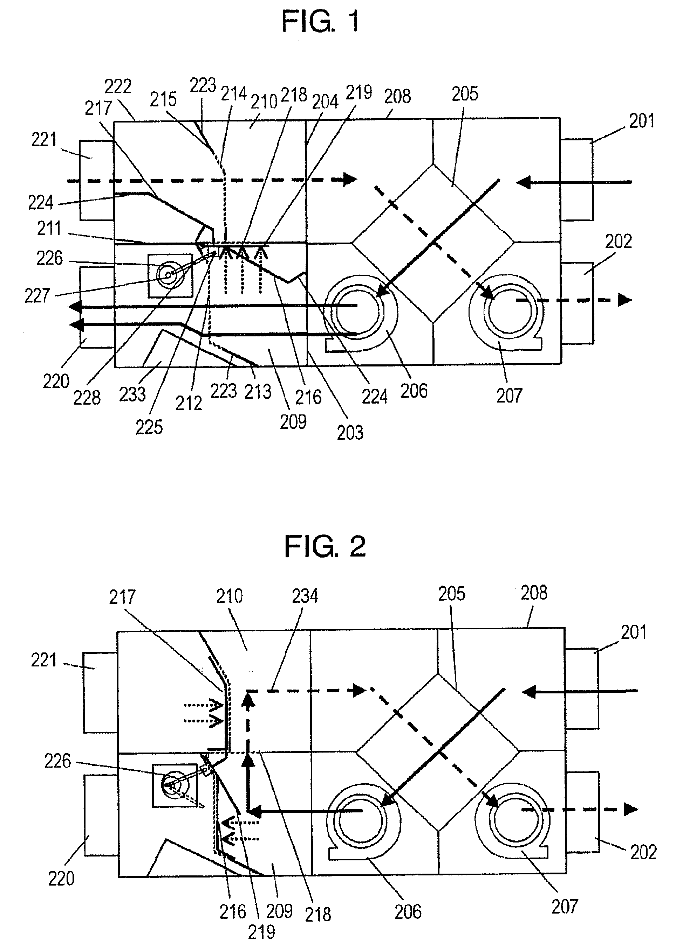

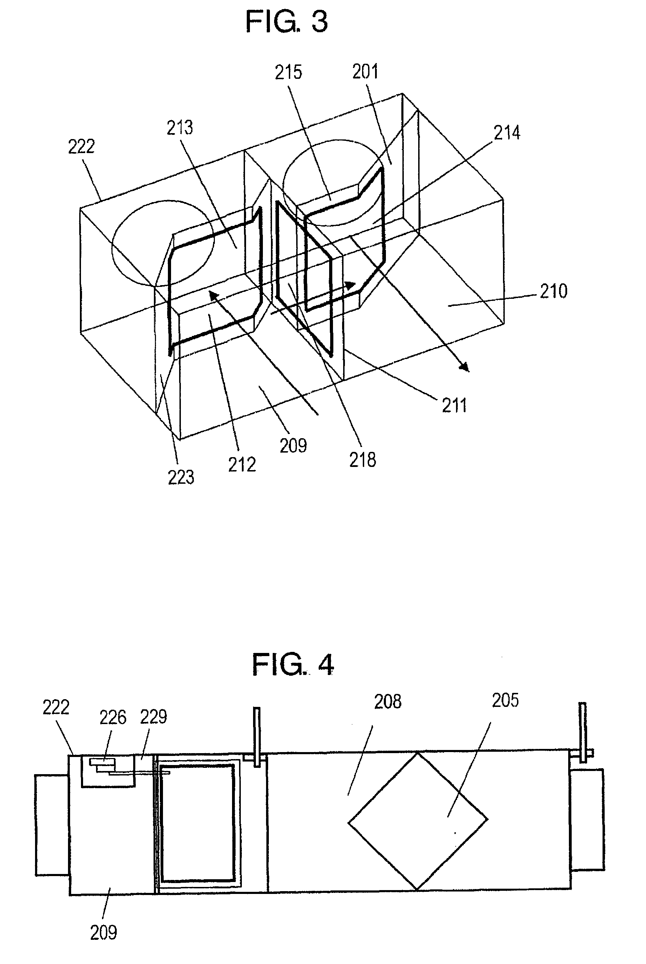

As illustrated in FIGS. 1 to 5, a heat exchange type ventilator according to Embodiment 1 includes indoor-side exhaust port 201 and indoor-side air supply port 202 on an indoor side of one side surface. Moreover, on the other side, connection port for exhaust 203 and connection port for air supply 204 are provided, and inside, heat exchanger 205 that performs heat exchange between an exhaust flow from indoor and an air supply flow from outdoor, and air blower for exhaust 206 that forms the exhaust flow are provided.

Moreover, the heat exchange type ventilator includes ventilating unit 208 in which air blower for air supply 207 that forms the air supply flow is provided. Partition plate 211 that partitions into exhaust flow path 209 connected to connection port for exhaust 203 of ventilating unit 208, and air supply flow path 210 connected to connection port for air supply 204 of ventilating unit 208, and exhaust opening 212 through which the exhaust flow passes are provided. Moreover, the heat exchange type ventilator includes exhaust damper receiver 213 provided in exhaust flow path 209, air supply damper receiver 215 having air supply opening 214 through which the air supply flow passes and provided in air supply flow path 210, exhaust damper 216 that opens and closes exhaust opening 212, and air supply damper 217 that opens and closes air supply opening 214.

Moreover, the heat exchange type ventilator includes flow path switching unit 222 in which circulating opening 218 that is opened in partition plate 211 so as to communicate exhaust flow path 209 and air supply flow path 210, circulating damper 219 that opens and closes circulating opening 218, and outdoor-side exhaust port 220 and outdoor-side air supply port 221 provided on an outdoor side.

Moreover, damper-side bent portions 224 that are each bent in a direction where an air flow is guided are provided in the exhaust damper 216 and air supply damper 217, and receiver-side bent portions 223 that are bent along damper-side bent portions 224 of exhaust damper 216 and air supply damper 217 are provided at the end portions of exhaust damper receiver 213 and air supply damper receiver 215, Exhaust damper 216 and air supply damper 217 are provided so as to act in directions where the exhaust opening, air supply opening and circulating opening are closed by air pressure of the exhaust flow and air supply flow.

Moreover, exhaust damper 216, air supply damper 217 and circulating damper 219 are provided integrally, so that these are opened and closed integrally by rotary shaft 225 on the damper side, and damper motor 226 that moves rotary shaft 225 is provided inside of flow path switching unit 222. Damper motor 226 and rotary shaft 225 on the damper side are provided inside of exhaust flow path 209. Rotary shaft 227 on the damper motor side and rotary shaft 225 on the damper side are connected by lever 228, and rotary shaft 227 on the damper motor side and rotary shaft 225 on the damper side are disposed so that their positions are shifted, and damper motor 226 is provided in top surface 229 of exhaust flow path 209 of flow path switching unit 222. Moreover, exhaust damper 216, air supply damper 217 and circulating damper 219 are provided so that the opening and closing operations thereof can be performed by damper motor 226 itself.

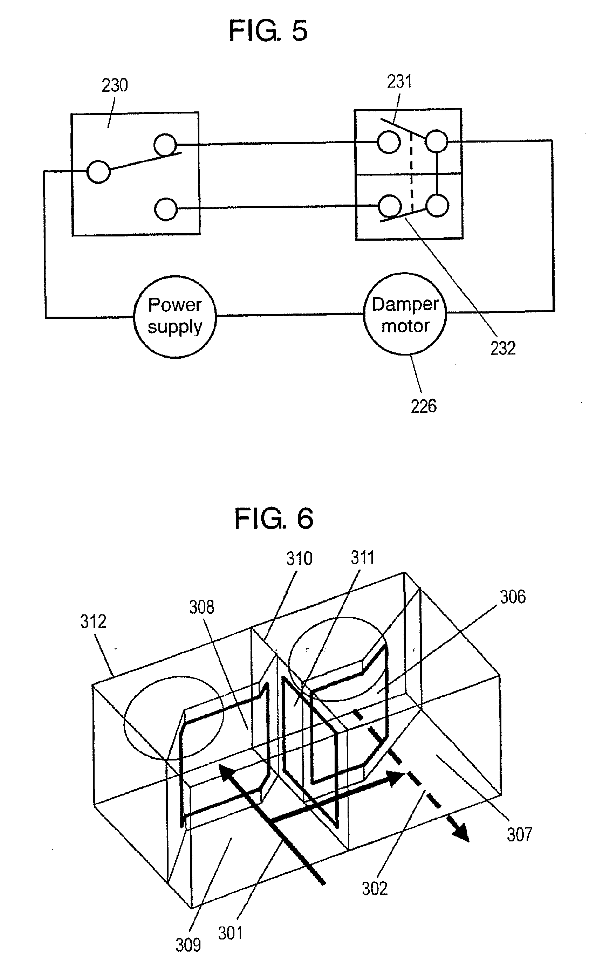

Moreover, as illustrated in FIG. 5, main switch 230 with a C contact is provided, and a circuit composed of two limit switches, in which first limit switch 231 and second limit switch 232 are provided in parallel so as to alternately conduct damper motor 226, is connected to main switch 230 in series. When exhaust damper 216 and air supply damper 217 are placed in closed positions, first limit switch 231 detects the closed state, and first limit switch 231 enters an opened state. A power supply circuit of damper motor 226 is opened to stop the energization of damper motor 226.

Moreover, containing part 233 (lower left portion of FIG. 1) that contains a controller and the like is provided inside of exhaust flow path 209 of flow path switching unit 222 so as to be projected in a chevron shape and serve as an air guide.

In the above-described constitution, when normal heat exchange ventilation operation is performed, as illustrated in FIG. 1, exhaust damper 216 and air supply damper 217 are in an opened state. In order to put circulating damper 219 into an opened state, the heat exchange type ventilator is operated in a state where exhaust damper 216, air supply damper 217, and circulating damper 219, which are provided integrally, are driven by damper motor 226. At this time, indoor air retaining an indoor heat is sucked into ventilating unit 208 from indoor-side exhaust port 201 by air blower for exhaust 206. The exhaust air passes through one passage of heat exchanger 205 and exhaust flow path 209 of flow path switching unit 222, and is exhausted outdoors from outdoor exhaust port 220. On the other hand, outdoor low-temperature air flows into air supply flow path 210 from outdoor-side air supply port 221, passes from air supply flow path 210 through the other passage inside of heat exchanger 205 provided in ventilating unit 208, and is supplied indoors from indoor-side air supply port 202, and the heat exchange is therefore performed.

Moreover, in the case where the heat exchange type ventilator according to the present invention is used in a low-temperature region, and when an air supply temperature is low and heat exchanger 205 is in an ice formed state, exhaust damper 216, air supply damper 217, and circulating damper 219 are driven by damper motor 226. Exhaust opening 212 is closed by exhaust damper 216, and air supply opening 214 is closed by air supply damper 217.

By obtaining a state illustrated in FIG. 2, where circulating damper 219 opens circulating opening 218, air blower for exhaust 206 enters an operating state. Once air blower for exhaust 206 is operated, the indoor air retaining heat is sucked from indoor-side exhaust port 201 into ventilating unit 208. The exhaust air passes through the one passage inside of heat exchanger 205, the formed ice in heat exchanger 205 is melted by the heat contained in the exhaust air. The exhaust air is deprived of the heat in a process of passing through heat exchanger 205. The exhaust air still retaining heat without being deprived again passes through air supply flow path 210 from opened circulating opening 218, passes through the passage on the other side of heat exchanger 205, and heats heat exchanger 205 to further melt the formed ice.

In summary, the heat exchange type ventilator according to Embodiment 1 includes:
ventilating unit 208 provided with,
   heat exchanger 205 that performs heat exchange between the exhaust flow from indoor and the air supply flow from outdoor,
   air blower for exhaust 206 that forms the exhaust flow, and
   air blower for air supply 207 that forms the air supply flow; and
flow path switching unit 222 provided with,
   partition plate 211 that partitions into exhaust flow path 209 and air supply flow path 210,
   exhaust opening 212 through which the exhaust flow passes,
   exhaust damper receiver 213 provided in exhaust flow path 209,
   air supply opening 214 through which the air supply flow passes,
   air supply damper receiver 215 provided in air supply flow path 210,
   exhaust damper 216 that opens and closes exhaust opening 212, and
   air supply damper 217 that opens and closes air supply opening 214, and the heat exchange type ventilator further includes:
      receiver-side bent portions 223 provided at the end portions of exhaust damper receiver 213 and air supply damper receiver 215; and
      damper-side bent portions 224 that are bent along receiver-side bent portions 223 of exhaust damper receiver 213 and air supply damper receiver 215.

According to the above-described constitution, particularly, exhaust damper receiver 213, air supply damper receiver 215, exhaust damper 216 and air supply damper 217, each of which is bent and has a small width, can realize larger exhaust opening 212 and air supply opening 214. The downsizing of flow path switching unit 222 can be achieved, and even if a rotary angle of exhaust damper 216 and air supply damper 217 is set to be small, a problem that exhaust damper 216 and air supply damper 217 disturb the air passing through exhaust flow path 209 and air supply flow path 210 can be eliminated.

Moreover, since damper-side bent portions 224 are each bent in the direction where the air flow is guided, exhaust opening 212 and air supply opening 214 are made larger, a fitting state is made more favorable, low pressure loss and low noise can be achieved, and additionally, a rectification effect can be obtained.

Moreover, the heat exchange type ventilator according to Embodiment 1 of the present invention includes circulating opening 218 opened in partition plate 211 so as to communicate exhaust flow path 209 and air supply flow path 210, and circulating damper 219 that opens and closes circulating opening 218. Moreover, in the three openings of exhaust opening 212, air supply opening 214 and circulating opening 218, exhaust damper 216, air supply damper 217 and circulating damper 219 are disposed, respectively. When the formed ice of heat exchanger 205 is melted, exhaust opening 212 and air supply opening 214 are closed by exhaust damper 216 and air supply damper 217, and circulating damper 219 is opened to open circulating opening 218.

This allows circulating flow path 234 to be formed, in which the warm indoor air passes through the passage on the one side of heat exchanger 205 on the ventilating unit 208 side, and warms heat exchanger 205 and then, enters air supply flow path 210 from circulating opening 218, passes through the passage on the other side of heat exchanger 205, and circulates indoors. The warm air passes through heat exchanger 205 twice. A melting time of the formed ice in heat exchanger 205 can be made shorter, and sizes of exhaust opening 212, air supply opening 214 and circulating opening 218 can be designed freely.

Exhaust damper 216, air supply damper 217, and circulating damper 219 are constructed so as to act in the directions where the exhaust opening, the air supply opening, and the circulating opening are closed by air pressure of the exhaust flow and the air supply flow. This increases airtightness of exhaust opening 212, air supply opening 214, and circulating opening 218, and the contact between the air supply flow and the exhaust flow can suppress the occurrence of dew condensation.

Damper motor 226 driving rotary shaft 225 on the damper side that integrally opens and closes exhaust damper 216, air supply damper 217, and circulating damper 219 is provided inside of flow path switching unit 222. As compared with a case where damper motor 226 is provided outside, the downsizing of flow path switching unit 222 can be achieved. Additionally, maintenance can be performed from a lower surface side, which makes it unnecessary to take large space for maintenance on the lower surface side of the flow path switching unit 222.

Moreover, since damper motor 226 and rotary shaft 227 of the dampers are provided inside of exhaust flow path 209, lever 228, which connects and moves rotary shaft 227 on the damper motor 226 side and rotary shaft 225 on the damper side, does not need to be penetrated through partition plate 211, sealing performance of partition plate 211 is improved, and damper motor 226 can be arranged in an environment at a nearly normal temperature. This alleviates thermal limitation of damper motor 226, thereby reducing a cost.

Moreover, damper motor 226 is detachable from exhaust damper 216, air supply damper 217, and circulating damper 219. Therefore, only damper motor 226 needs to be detached at the time of maintenance, thereby improving maintainability. In the case where damper motor 226 and the dampers are constructed integrally, the dampers are arranged so as to penetrate through partition plate 211. Since this construction makes it unnecessary to divide partition plate 211, which would be prepared to perform the maintenance of the dampers, simplification of the heat exchange type ventilator can be achieved.

Moreover, the opening and closing operations of exhaust damper 216, air supply damper 217, and circulating damper 219 can be performed by damper motor 226 itself. This can prevent impact noise and the like from occurring without any influence of air pressure on opening and closing speeds of exhaust damper 216, air supply damper 217, and circulating damper 219. Additionally, as compared with a case where the dampers are returned using a spring or the like, the opening and closing operations can be surely performed without yielding to the air pressure.

Since rotary shaft 227 on the damper motor side and rotary shaft 225 on the damper side are connected by lever 228 and the positions of rotary shaft 227 on the damper motor side and rotary shaft 225 on the damper side are shifted, by rotating rotary shaft 227 on the damper motor 226 side to reciprocate lever 228 and move rotary shaft 225 on the damper side, the operation angle of rotary shaft 227 on the damper motor side and the operation angle of the dampers can be shifted, so that operation ranges of the dampers can be set freely, thereby bringing about the downsizing of the heat exchange type ventilator.

Moreover, since damper motor 226 is provided on the top surface 229 side of flow path switching unit 222, even if dew condensation water occurs, a problem that the dew condensation water is pooling in damper motor is eliminated, thereby ensuring mechanical and electrical safety of damper motor 226 sufficiently.

Moreover, since two limit switches of first limit switch 231 and second limit switch 232 are used to stop the energization of damper motor 226 while the dampers are stopped, energy saving effects can be exerted by stopping the energization.

Since containing part 233 for the controller and the like is provided inside of flow path switching unit 222 so as to be projected in a chevron shape and serve as an air guide, the shape allowing the containing part 233 to serve as the air guide can reduce ventilation resistance.

The heat exchange type ventilator of the present invention can be applied to a flow path opening and closing apparatus of an air conditioner, for example, by using damper receivers and dampers each provided with a bent portion in the flow path opening and closing apparatus using dampers which are provided inside of a duct feeding conditioning air of the air conditioner.

### (Embodiment 2)

With reference to FIGS. 6 to 8, Embodiment 2 of the present invention is described.

As shown in FIGS. 6 to 8, a heat exchange type ventilator according to Embodiment 2 performs heat exchange between indoor high-temperature air 301 and outdoor low-temperature air 302 by air blower 303 and heat exchange element 304. Moreover, heat exchange device part 305 that performs outdoor air supply and indoor air exhaust, low-temperature air path 307 arranged on an outdoor side of heat exchange device part 305 and extending from low-temperature air suction port 306 to heat exchange device part 305, high-temperature air path 309 extending from heat exchange device part 305 to high-temperature air exhaust port 308, and a bypass air path obtained by opening 311 provided in partition 310 between low-temperature air path 307 and high-temperature air path 309 are provided. Antifreezing part 312 is provided in which filter 317 is provided in low-temperature air path 307 through which low-temperature air 302 sucked from low-temperature air suction port 306 and high-temperature air 301 exhausted from heat exchange device part 305 and returned to low-temperature air path 307 from high-temperature air path 309 through opening 311, and opening and closing functions by dampers 314, 315 and 316 are provided in low-temperature air suction port 306, high-temperature air exhaust port 308, and opening 311.

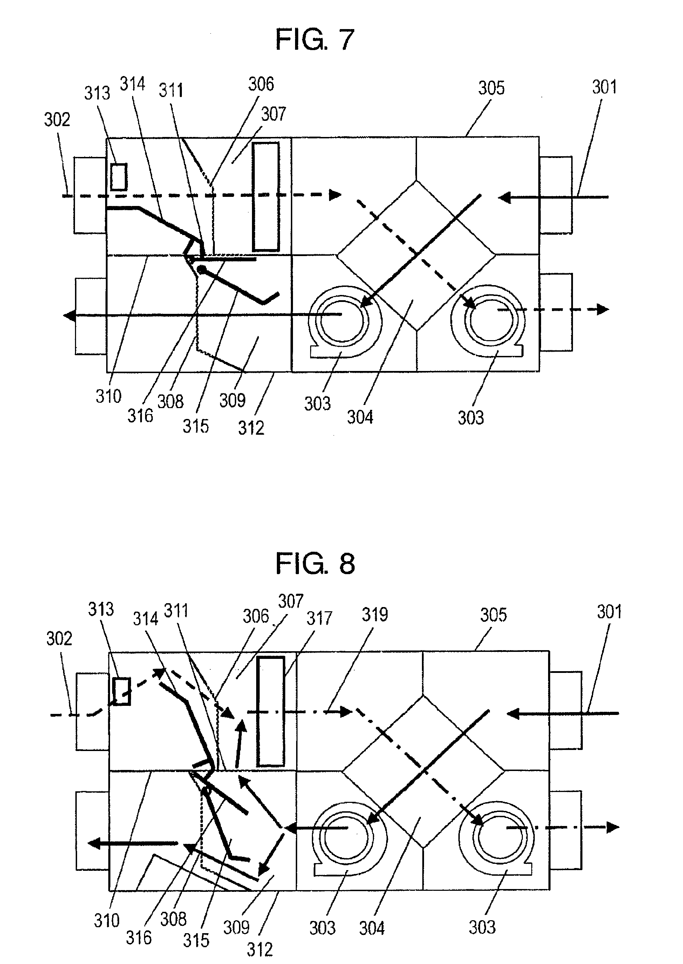

As shown in FIG. 7, temperature sensor 313 is arranged upstream of low-temperature air suction port 306 of antifreezing part 312, and the opening degrees of low-temperature air suction port 306, high-temperature air exhaust port 308, and opening 311 of antifreezing part 312 are varied by the dampers depending on the temperature. With such a constitution, an amount of low-temperature air 302 sucked from low-temperature air suction port 306 into low-temperature air path 307, an amount of high-temperature air 301 exhausted from high-temperature air path 309 to high-temperature air exhaust port 308, and an amount of high-temperature air 301 returned to low-temperature air path 307 from high-temperature air path 309 through opening 311 can be adjusted freely.

Moreover, damper 314 for low-temperature air suction port and damper 315 for high-temperature air exhaust port control low-temperature air suction port 306 and high-temperature air exhaust port 308 to be in a fully open state. Furthermore, when damper 316 for partition opening controls opening 311 to be in fully-closed state, high-temperature air 301 exhausted from heat exchange device part 305 passes through high-temperature air path 309, and is all exhausted outdoors from high-temperature air exhaust port 308. In an operation state where low-temperature air 302 sucked from low-temperature air suction port 306 passes through low-temperature air path 307 and is supplied to heat exchange device part 305, if temperature sensor 313 determines that a temperature of outdoor low-temperature air 302 sucked from low-temperature air suction port 306 is higher than a temperature at which heat exchange element 304 is frozen, the operation state is continued. If temperature sensor 313 determines that the temperature of outdoor low-temperature air 302 sucked from low-temperature air suction port 306 is lower than the temperature at which heat exchange element 304 is frozen, as illustrated in FIG. 8, damper 314 for low-temperature air suction port and damper 315 for high-temperature air exhaust port perform control so that the opening degrees of low-temperature air suction port 306 and high-temperature air exhaust port 308 are lowered. At this time, damper 316 for partition opening opens opening 311, so that part of high-temperature air 301 enters low-temperature air path 307 from high-temperature air path 309 through opening 311. It is mixed with low-temperature air 302 sucked from low-temperature air suction port 306 to be mixed air 319, which is supplied to heat exchange device part 305 in a state where the temperature rises, so that antifreezing of heat exchange element 304 can be performed.

Moreover, remaining high-temperature air 301 that is exhausted from heat exchange device part 305 and does not enter low-temperature air path 307 from opening 311 is exhausted outdoors from high-temperature air exhaust port 308. The above-described operations allow the heat exchange type ventilator to constantly perform ventilation, so that the antifreezing of heat exchange element 304 can be performed.

Based on the temperature of low-temperature air 302, damper 314 for low-temperature air suction port and damper 315 for high-temperature air exhaust port, and damper 316 for partition opening are moved to vary the opening degrees of low-temperature air suction port 306, high-temperature air exhaust port 308, and opening 311. Thereby, even if the temperature of low-temperature air 302 sucked from low-temperature air suction port 306 varies, maximum ventilation can be performed while mixed air 319 supplied to heat exchange device part 305 is kept at a minimum temperature at which heat exchange element 304 is not frozen.

Moreover, when temperature sensor 313 determines a state where the temperature of outdoor low-temperature air 302 sucked from low-temperature air suction port 306 rises to be higher than the temperature at which heat exchange element 304 is frozen, the operation returns in the operation state as shown in FIG. 7.

Contaminated outdoor low-temperature air 302 sucked from low-temperature air suction port 306, and contaminated indoor high-temperature air 301 exhausted from heat exchange device part 305 and entering low-temperature air path 307 from high-temperature air path 309 through opening 311 are purified to obtain mixed air 319 and outdoor low-temperature air 302.

In summary, the heat exchange type ventilator according to Embodiment 2 includes:
heat exchange device part 305 including,
heat exchange element 304 that performs heat exchange between indoor high-temperature air 301 and outdoor low-temperature air 302,
the air blower that sends high-temperature air 301 outdoors and the low-temperature air indoors; and
antifreezing part 312 including,
   low-temperature air path 307 that is arranged on the outdoor side of heat exchange device part 305, and extends from low-temperature air suction port 306 to heat exchange device part 305,
   high-temperature air path 309 that extends from the heat exchange device part to high-temperature air exhaust port 308,
   opening 311 through which the air passes the partition 310 between low-temperature air path 307 and high-temperature air path 309, and
   dampers 314, 315 and 316 including the opening and closing functions that vary opening areas of the air paths, in low-temperature air suction port 306, high-temperature air exhaust port 308, and opening 311.

### (Embodiment 3)

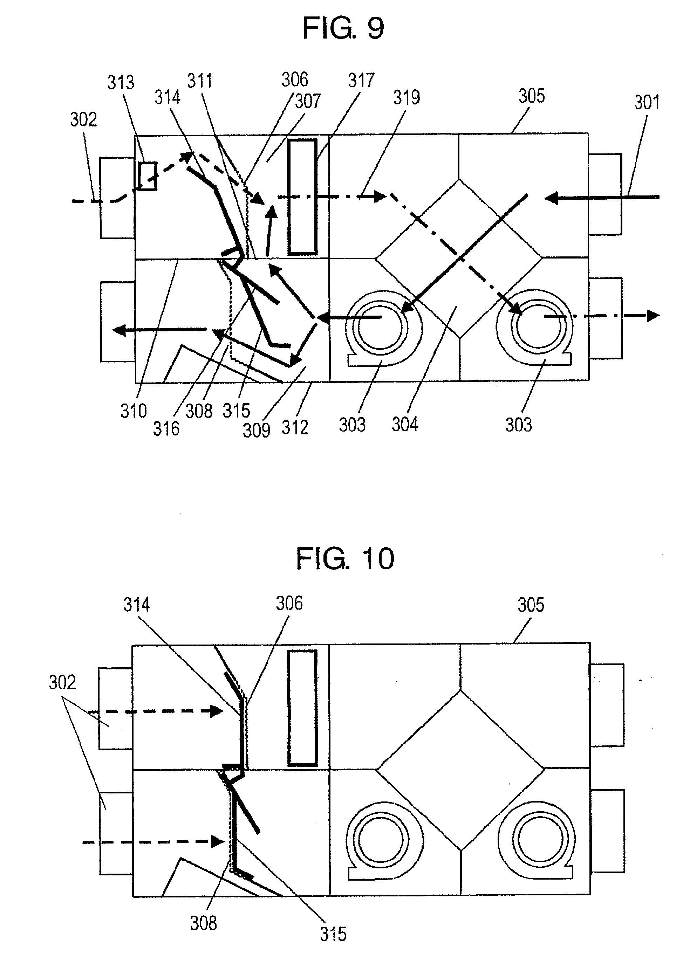

Embodiment 3 of the present invention is described with reference to FIG, 9. In FIG. 9, the same reference numerals are used for the same components as those of Embodiments 1, 2, and their descriptions are omitted.

As shown in FIG. 9, a constitution is employed in which two dampers of damper 314 for the low-temperature air suction port, damper 315 for the high-temperature air exhaust port, and damper 316 for the partition opening, which vary the opening degrees of low-temperature air suction port 306, high-temperature air exhaust part 308, and opening 311, are integrated to interlock the operations.

With the above-described constitution, motors for driving dampers 314, 315, and 316 can be reduced in number, thereby saving space and reducing cost.

Moreover, a constitution is employed in which the operations of damper 314 for low-temperature air suction port, damper 315 for high-temperature air exhaust port, and damper 316 for partition opening, which vary the opening degrees of low-temperature air suction port 306, high-temperature air exhaust port 308 and opening 311, are all independent of one another.

With the above-described constitution, since respective ventilating path areas of low-temperature air suction port 306, high-temperature air exhaust port 308, and opening 311 can be varied without any influence on the operations of the other dampers, temperature adjustment of mixed air 319 and adjustment of an ventilation amount can be performed freely.

### (Embodiment 4)

A heat exchange type ventilator according to Embodiment 4 is shown in FIG. 10. In FIG. 10, the same reference numerals are used for the same constitutions as that of FIG. 9, and their descriptions are omitted.

As shown in FIG. 10, a constitution is employed in which low-temperature air suction port 306 and high-temperature air exhaust port 308 are closed by damper 314 for low-temperature air suction port and damper 315 for high-temperature air exhaust port while heat exchange device part 305 is stopped.

With the above-described constitution, low-temperature air 302 and sound intruding through low-temperature air suction port 306 and high-temperature air exhaust port 308 from outdoor while heat exchange device part 305 is stopped can be shut off.

### (Embodiment 5)

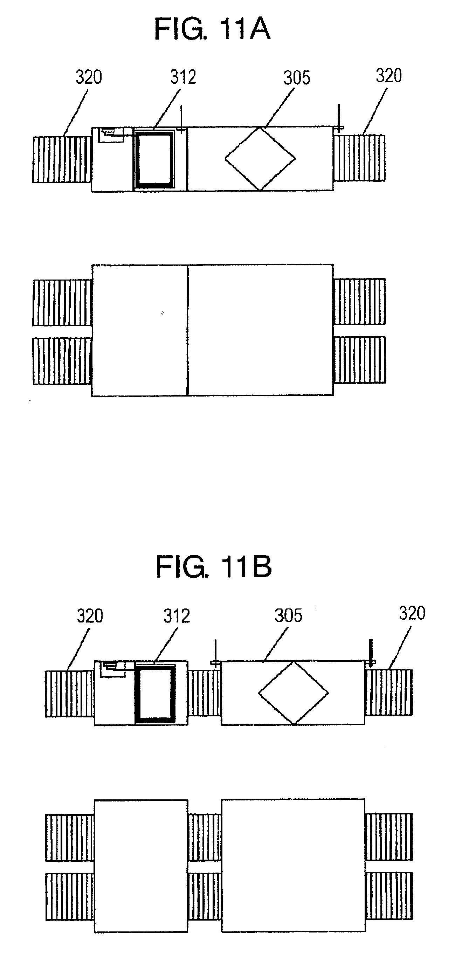

A heat exchange type ventilator according to Embodiment 5 is shown in FIGS. 11A, 11B. In FIGS. 11A, 11B, the same reference numerals are used for the same constitutions as those of FIGS 7 to 10, and their descriptions are omitted.

As shown in FIG 11A, a constitution is employed in which antifreezing part 312 is constructed integrally with heat exchange device part 305 and provided on duct piping 320 connecting the outdoor and the indoor.

With the above-described constitution, the integration of heat exchange device part 305 and antifreezing part 312 is achieved. FIG. 11B illustrates a constitution in which heat exchange device part 305 and antifreezing part 312 are connected by duct piping 320. With such a constitution, for example, even under a roof where installation space is small, installation of the device can be performed utilizing space for duct piping 320.

### (Embodiment 6)

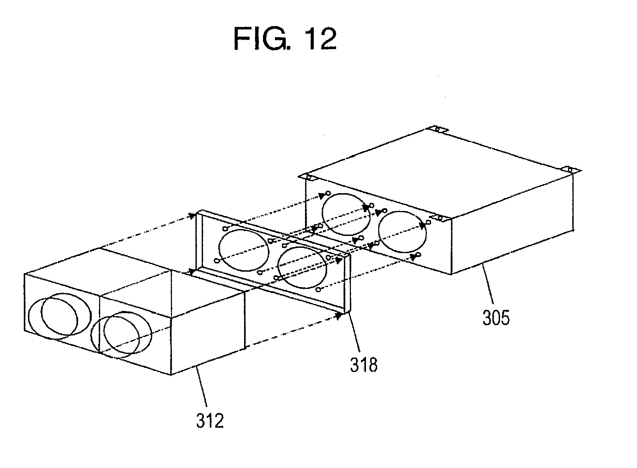

A heat exchange type ventilator according to Embodiment 6 is illustrated in FIG. 12. In FIG. 12, the same reference numerals are used for the same constitutions as those of FIGS. 6 to 11B, and their descriptions are omitted. As shown in FIG. 12, when antifreezing part 312 is fixed to heat exchange device part 305, fixture 318 having an air path constitution for antifreezing part 312 in combination is fixed to heat exchange device part 305. Thereafter, antifreezing part 312 is fixed to fixture 318.

With the above-described constitution, when antifreezing part 312 is fixed to heat exchange device part 305, antifreezing part 312 does not need to be suspended- Moreover, post-fitting to heat exchange device part 305 suspended in advance is also enabled, thereby improving workability.

Moreover, by combining fixture 318 and the part constructing the air path, parts of the heat exchange device part can be reduced in number. The heat exchange type ventilator according to Embodiment 6 can be also adapted to applications in a ventilator field that requires constant ventilation while preventing freeze of the heat exchange element by mixing part of the high-temperature air exhausted from indoor into the low-temperature air supplied from outdoor.

### (Embodiment 7)

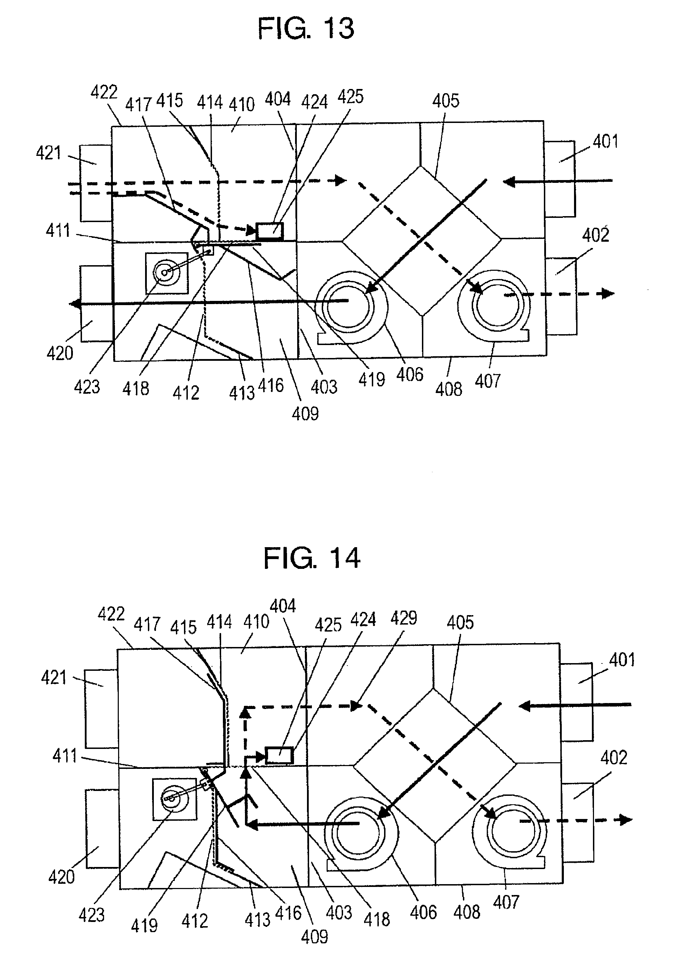

A heat exchange type ventilator according to Embodiment 7 is shown in FIGS. 13 to 16. The heat exchange type ventilator includes indoor-side exhaust port 401 and indoor-side air supply port 402 on an indoor side of one side surface, and connection port for exhaust 403 and connection port for air supply 404 in the other side surface. Moreover, the heat exchange type ventilator includes, inside, heat exchanger 405 that performs heat exchange between an exhaust flow from indoor and an air supply flow from outdoor. The heat exchange type ventilator includes ventilating unit 408 having air blower for exhaust 406 that forms an exhaust air flow, and air blower for air supply 407 that forms the air supply flow. Partition plate 411 that partitions into exhaust flow path 409 connected to connection port for exhaust 403 of ventilating unit 408 and air supply flow path 410 connected to connection port for air supply 404 of ventilating unit 408, and exhaust opening 412 through which the exhaust flow passes are included.

Moreover, the heat exchange type ventilator includes exhaust damper receiver 413 provided in exhaust flow path 409, and air supply opening 414 through which the air supply flow passes. Air supply damper receiver 415 provided in air supply flow path 410, and exhaust damper 416 that opens and closes exhaust opening 412 are included. Furthermore, flow path switching unit 422 is included, in which air supply damper 417 that opens and closes air supply opening 414, and circulating opening 418 opened in partition plate 411 so as to communicate exhaust flow path 409 and air supply flow path 410, circulating damper 419 that opens and closes circulating opening 418, outdoor-side exhaust port 420 on an outdoor side, and outdoor-side air supply port 421 are provided.

Moreover, the heat exchange type ventilator is constituted so that exhaust damper 416, air supply damper 417, and circulating damper 419 are integrated so as to be opened and closed integrally, and damper motor 423 that integrally drives opening and closing of exhaust damper 416, air supply damper 417, and circulating damper 419 is provided inside of exhaust flow path 409.

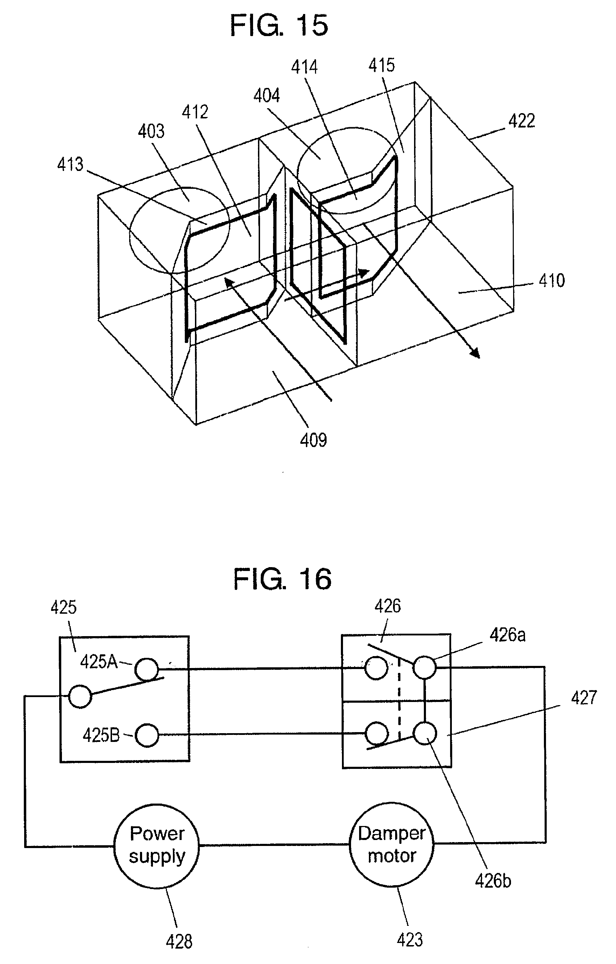

Sensor part 424 detecting an air temperature is provided in the vicinity of circulating opening 418 inside of flow path switching unit 422. Sensor part 424 is formed using one temperature sensor 425 of a C contact. As shown in an electric circuit diagram of FIG. 16, limit switch 426 in which first limit switch 426a and second limit switch 426b are provided in parallel so as to be alternately conducted is connected in series between temperature sensor 425 with the C contact and damper motor 423. When exhaust damper 416 and air supply damper 417 are in closed positions, first limit switch 426a detects the closed state, and first limit switch 426a is in an opened state. A power supply circuit of damper motor 423 is opened to stop the energization of damper motor 423.

In the above-described constitution, when normal heat exchange ventilation operation is performed, as shown in FIG. 13, exhaust damper 416 and air supply damper 417 are in an opened state, and circulating damper 419 is put into a closed state. Indoor air having an indoor heat is sucked from indoor-side exhaust port 401 into ventilating unit 408 by air blower for exhaust 406. The exhaust air passes through one passage of heat exchanger 405 and exhaust flow path 409 of flow path switching unit 422, and is exhausted outdoors from outdoor exhaust port 420.

On the other hand, outdoor air flows from outdoor-side air supply port 421 into air supply flow path 410 by air blower for air supply 407, passes from air supply flow path 410 through the other passage inside of heat exchanger 405 provided in ventilating unit 408, and is supplied indoors from indoor-side air supply port 402 to thereby perform heat exchange ventilation.

Moreover, in the case where the heat exchange type ventilator is used in a low-temperature region, and when an air supply temperature is low and heat exchanger 405 is in an ice formed state, sensor part 424 senses the temperature, exhaust damper 416, air supply damper 417 and circulating damper 419 are driven by damper motor 423, so that exhaust opening 412 is closed by exhaust damper 416, Air supply opening 414 is closed by air supply damper 417, and circulating damper 419 opens circulating opening 418 to put it into a state as shown in FIG. 14, by which air blower for exhaust 406 is put into an operating state. At this time, the indoor air retaining heat is sucked from indoor-side exhaust port 401 into ventilating unit 408, and the exhaust heat air passes through the one passage inside of heat exchanger 405, the formed ice in heat exchanger 405 is melted by the heat contained in the exhaust heat air.

The exhaust air passing through heat exchanger 405 and still retaining heat without being deprived again passes through the passage on the other side of heat exchanger 405 from opened circulating opening 418 via air supply flow path 410, and heats heat exchanger 405 to further melt the formed ice.

Next, operational relations of temperature sensor 425, damper motor 423, and the respective dampers are described

FIG. 16 shows a state where exhaust damper 416 and air supply damper 417 are opened, and circulating damper 419 closes the circulating opening. First limit switch 426a is in an opened state, so that damper motor 423 is stopped. At this time, temperature sensor 425 is in contact with the air supply flow of air supply flow path 410.

In this state, the operation of the heat exchange type ventilator is continued, and temperature sensor 425 senses a low temperature of the air supply flow, and when heat exchanger 405 is close to an ice-formed state, the connection is switched from contact 425A of temperature sensor 425 to contact 425B thereof, and damper motor 423, which has been stopped, is energized via second limit switch 426b. Damper motor 423 is operated, so that exhaust damper 416 and air supply damper 417 close exhaust opening 412 and air supply opening 414, and circulating damper 419 is opened to open circulating opening 418. When this state is obtained, first limit switch 426a is in a closed state, and second limit switch 426b is in an opened state so that the energization of damper motor 423 is stopped.

The exhaust air exhausted from indoor-side exhaust port 401 passes through heat exchanger 405, and then, passes through circulating opening 418 to enter air supply flow path 410. Circulating flow path 429 is formed, in which the air again passes through heat exchanger 405 from air supply flow path 410, and is supplied to indoor-side air supply exhaust port 402, so that the formed ice of heat exchanger 405 is melted, When the temperature sensed by temperature sensor 425 is a predetermined temperature or higher, temperature sensor 425 switches from contact 425B to contact 425A, and damper motor 423 is energized via first limit switch 426a. Moreover, by damper motor 423, exhaust damper 416 and air supply damper 417 are put into an opened state, and circulating damper 419 is put into a closed state. At this time, the normal heat exchange ventilating operation is performed, at which time the electric circuit is in the state as shown in FIG. 16. That is, temperature sensor 425 is connected to contact 425A, first limit switch 246a is in an opened state to stop the energization of damper motor 423.

In summary, the heat exchange type ventilator of Embodiment 7 includes:
ventilating unit 408 provided with,
   heat exchanger 405 that performs heat exchange between the indoor exhaust flow path and the air supply flow from outdoor,
   air blower for exhaust 406 that forms the exhaust flow, and
   air blower for air supply 407 that forms the air flow; and
flow path switching unit 422 provided with,
   partition plate 411 that partitions into exhaust flow path 409 and air supply flow path 410,
   exhaust opening 412 through which the exhaust flow passes,
   exhaust damper receiver 413 provided in exhaust flow path 409,
   air supply opening 414 through which the air supply flow passes,
   air supply damper receiver 415 provided in air supply flow path 410,
   exhaust damper 416 that opens and closes exhaust opening 412,
   air supply damper 417 that opens and closes air supply opening 414,
   circulating opening 418 opened in partition plate 411 so as to communicate exhaust flow path 409 and air supply flow path 410,
   circulating damper 419 that opens and closes circulating opening 418,
   damper motor 423 that opens and closes the respective dampers,
   sensor part 424 that detects an air temperature, and
   sensor part 424.

Sensor part 424 is provided in the vicinity of circulating opening 418 inside of air supply flow path 410 of flow path switching unit 422. Since this brings two kinds of air flow of the low-temperature air from outdoor and the indoor high-temperature air into direct contact with sensor part 424, sensor part 424 senses the temperature of air supply flow and the temperature of circulating flow, and opens and closes the respective dampers, which enables the switching between the introduction of the outdoor air and the circulation of the indoor air. According to such a constitution, the installation of the timer or the like for switching between the introduction of the outdoor air and the circulation of indoor air is unnecessary, thereby reducing the cost and simplifying the electric circuit.

Moreover, although since the sensor part 424 is formed of one temperature sensor 425, two temperature sensors would be required to sense the two kinds of air flows, according to Embodiment 7, two kinds of air flow temperatures can be sensed by one temperature sensor 425, thereby simplifying the circuit at low cost.

Moreover, since sensor part 424 is formed of temperature sensor 425 of a C contact, the contact can be switched in accordance with the temperature of the abutting air flow. Even in either case of the opening and closing of the respective dampers, the energization of damper motor 423 can be performed. The driving force of damper motor 423 can be utilized to open and close the dampers, and as compared with the case where a spring or the like is utilized, the dampers can be surely opened and closed without yielding to air pressure. Moreover, actuation sound when the dampers are opened and closed can be prevented from occurring, and the opening and closing of the dampers are enabled using one temperature sensor 425, thereby further reducing the cost and simplifying the electric circuit.

### (Embodiment 8)

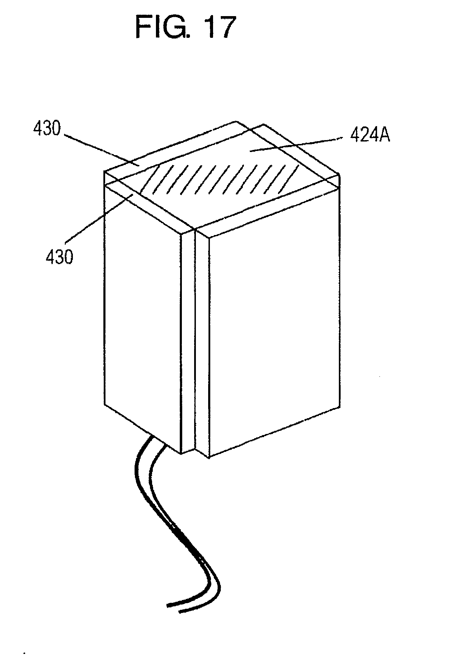

A heat exchange type ventilator according to Embodiment 8 is shown in FIG. 17. As shown in FIG. 17, heat insulting material 430 encompasses a periphery of sensor part 424A.

In the above-described constitution, sensor part 424A detecting a temperature of an air flow utilizes the fact that a reaction time differs depending on a type and a thickness of heat insulating material 430 encompassing the periphery thereof to freely adjust sensitivity of sensor part 424A. Since opening and closing times of the dampers can be adjusted freely, and these operations can be addressed by one sensor part 424A, the installation of the timer or the like is not required, thereby reducing the cost and simplifying the electric circuit.

### (Embodiment 9)

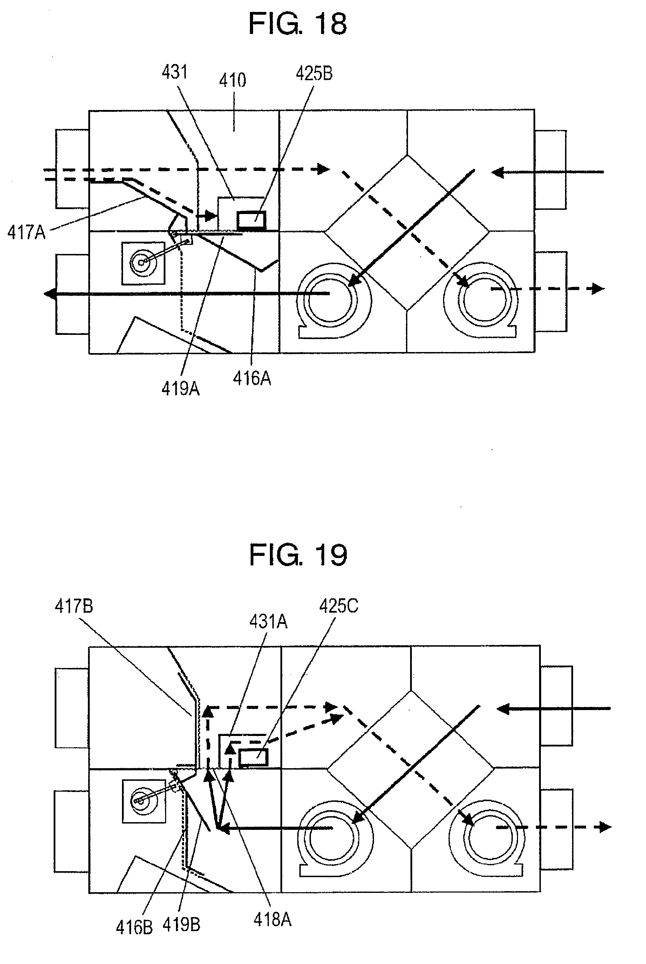

The heat exchange type ventilator according to Embodiment 9 is shown in FIG. 18. As shown in FIG. 18, enclosure 431 is provided so that an air supply flow does not directly contact temperature sensor 425B.

In the above-constitution, a time until detecting a predetermined temperature is shorter in the case where the air flow directly contacts the temperature sensor 425B. On the other hand, in the case where the air flow does not directly contact, the detection time is longer. Therefore, a shape of enclosure 431 is changed to change a degree to which the corresponding air flow contacts temperature sensor 425B. This can freely adjust the opening and closing times of exhaust damper 416A, air supply damper 417A and circulating damper 419A. Additionally, the installation of the timer or the like is not required, thereby reducing the cost and simplifying the electric circuit.

### (Embodiment 10)

A heat exchange type ventilator according to Embodiment 10 is shown in FIG. 19. As shown in FIG. 19, enclosure 431A is provided so that a circulating flow passing through circulating opening 418A does not directly contact temperature sensor 425C.

In the above-described constitution, a reaction time of temperature sensor 425C is shorter in the case where the circulating air flow directly hits the sensor, and the reaction time is longer in the case where the circulating air flow does not directly hit the sensor part. A shape of enclosure 431A is changed to change a degree to which the corresponding air flow contacts temperature sensor 425C, by which the opening and closing times of exhaust damper 416B, air supply damper 417B, and circulating damper 419B can be freely adjusted. Moreover, enclosure 431A may be formed so as to divide an air amount flowing from circulating opening 418A into two. This may make the flow of the air hitting temperature sensor 425C less, thereby varying the detection degree of temperature sensor 425C. This makes the installation of the timer or the like unnecessary, thereby reducing the cost and simplifying the electric circuit.

### (Embodiment 11)

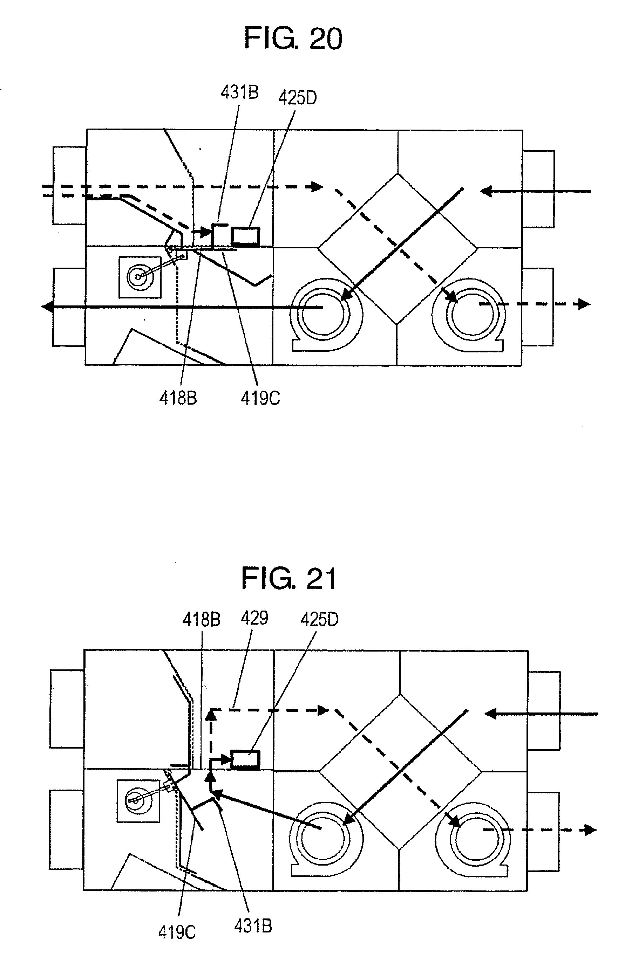

A heat exchange type ventilator according to Embodiment 10 is illustrated in FIGS. 20 and 21 Part of circulating damper 419C is formed so as to play a role of enclosure 431B for temperature sensor 425D.

In the above-described constitution, in a state where circulating damper 419C closes circulating opening 418B, enclosure 431B formed in the part of circulating damper 419C serves as an enclosure of temperature sensor 425D. It blocks the air supply flow directly hitting temperature sensor 425D. This makes a reaction time of temperature sensor 425D longer. The opening and closing times of the respective dampers can be adjusted freely, and the installation of the timer or the like is not required, thereby reducing the cost and simplifying the electric circuit,

In a state where circulating damper 419C opens circulating opening 418B, enclosure 431B formed in circulating damper 419C is positioned outside of circulating flow path 429.

### (Embodiment 12)

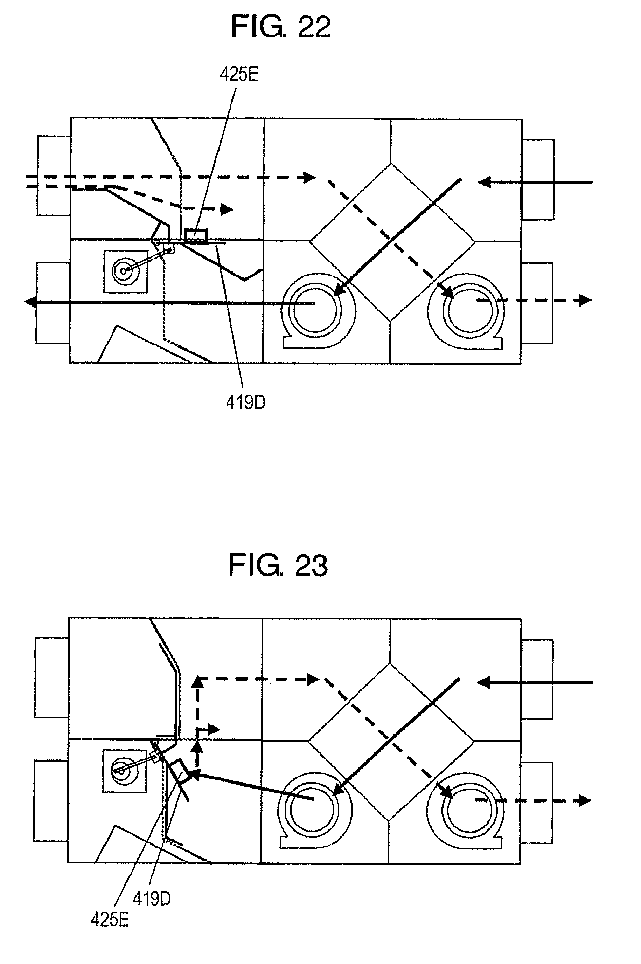

A heat exchange type ventilator according to Embodiment 12 is shown in FIGS. 22 and 23. Temperature sensor 425E is provided in circulating damper 419D.

In the above-described constitution, temperature sensor 425E can be provided adjustably to be positioned at a place where the air flow directly hits it, or where the air flow does not directly hit it. According to such a constitution, a reaction time of temperature sensor 425E can be adjusted. This allows the opening and closing times of the respective dampers to be adjusted freely, and makes the installation of the timer or the like unnecessary, thereby reducing the cost and simplifying the electric circuit.

### (Embodiment 13)

A heat exchange type ventilator according to Embodiment 13 is shown in FIG. 24. As shown in FIG. 24, waterproof measures are applied to temperature sensor 425F.

In the above-described constitution, since a problem that water enters temperature sensor 425F can be prevented, water can be prevented from intruding into temperature sensor 425F even if dew condensation water occurs inside of flow path switching unit 422, thereby sufficiently assuring the safety of the heat exchange type ventilator.

Moreover, in the heat exchange type ventilator of the present invention, since air purifying means for removing dust is provided in a circulating flow path in which indoor air circulates, and an circulating opening that communicates the circulating flow path to an air flow path that supplies outdoor fresh air is provided, one contamination degree detecting sensor that detects a contamination degree in the air can be provided in the vicinity of the circulating opening of the air supply flow path. Therefore, the heat exchange type ventilator can be also applied to an application of an air purifier capable of alternately performing purification of the outdoor air supply and the indoor air.

### INDUSTRIAL APPLICABILITY

The heat exchange type ventilator of the present invention can be applied to a flow path opening and closing apparatus of an air conditioner by using damper receivers and dampers each provided with a bent portion in the flow path opening and closing apparatus using dampers which are provided inside of a duct feeding conditioning air of the air conditioner.

By mixing part of high-temperature air exhausted from indoor into low-temperature air supplied from outdoor, the present invention can be adapted to applications in a ventilator field and the like which require constant ventilation while preventing freeze of a heat exchange element.

The present invention can be also applied to an application of an air purifier by providing air purifying means for removing dust in a circulating flow path in which indoor air circulates, providing a circulating opening that communicates the circulating flow path to an air supply flow path that supplies outdoor fresh air, and providing one contamination degree detecting sensor that detects a contamination degree in the air in the vicinity of the circulation opening of the air supply flow path to alternately perform the purification of the outdoor air supply and indoor air.

## Claims

1. A heat exchange type ventilator comprising:
a ventilating unit (208, 408) including:
a heat exchanger (205, 405) that performs heat exchange between an exhaust flow from indoor and an air supply flow from outdoor;
an air blower for exhaust (206, 406) that forms the exhaust flow; and
an air blower for air supply (207, 407) that forms the air supply flow; and
a flow path switching unit (222, 422) including:
a partition plate (211, 411) that partitions into an exhaust flow path (209, 409) and an air supply flow path (210, 410);
an exhaust damper receiver (213, 413) including an exhaust opening (212, 412) through which the exhaust flow passes, and provided in the exhaust flow path (209, 409);
an air supply damper receiver (215, 415) including an air supply opening (214, 414) through which the air supply flow passes, and provided in the air supply flow path (210, 410); and
an exhaust damper (216, 416) that opens and closes the exhaust opening (212, 412), and an air supply damper (217, 417) that opens and closes the air supply opening (214, 414);
**characterized in that**:
receiver-side bent portions (223) are provided at the end portions of the exhaust damper receiver (213, 413) and the air supply damper receiver (215, 415),
damper-side bent portions (224), which are bent along the receiver-side bent portions (223) of the exhaust damper receiver (213, 413) and the air supply damper receiver (215, 415), are provided at the exhaust damper (216, 416) and the air supply damper (217, 417);
a circulating opening (218, 418, 418A) that is opened at the partition plate (211, 411) for communicating the exhaust flow path (209, 409) and the air supply flow path (210, 410);
a circulating damper (219, 419, 419C, 419D) that opens and closes the circulating opening (218, 418, 418A),
wherein the exhaust damper (216, 416), the air supply damper (217, 417), and the circulating damper (219, 419, 419C, 419D) are disposed at the three openings of the exhaust opening (212, 412) and the air supply opening (214, 414), and the circulating opening (218, 418, 418A), respectively; and
wherein the exhaust damper (216, 416) and the air supply damper (217, 417), and the circulating damper (219, 419, 419C, 419D) are provided integrally, and are opened and closed integrally by a rotary shaft (225) on a side of the integrally provided dampers (216, 416; 217, 417; 219, 419, 419C, 419D).

2. The heat exchange type ventilator according to claim 1,
wherein the damper-side bent portions (224) are each bent in a direction in which a flow of air is guided.

3. The heat exchange type ventilator according to claim 1,
wherein the exhaust damper (216, 416) and the air supply damper (217, 417), and the circulating damper (219, 419, 419C, 419D) act in directions where the air supply opening (214, 414), the exhaust opening (212, 412), and the circulating opening (218, 418, 418A) are closed by air pressure of the exhaust flow and the air supply flow.

4. The heat exchange type ventilator according to claim 1,
wherein a damper motor (226, 423), which drives the rotary shaft (225) on the side of the integrally provided dampers (216, 416; 217, 417; 219, 419, 419C, 419D) integrally opening and closing the exhaust damper (216, 416) and the air supply damper (217, 417), and the circulating damper (219, 419, 419C, 419D), is provided inside of the flow path switching unit (222, 422).

5. The heat exchange type ventilator according to claim 4,
wherein both a rotary shaft (227) on a side of the damper motor (226, 423) and the rotary shaft (225) on the side of the damper are provided inside of the exhaust flow path (209, 409).

6. The heat exchange type ventilator according to claim 4 or 5, wherein the damper motor (226, 423) is detachable from the exhaust damper (216, 416), the air supply damper (217, 417), and the circulating damper (219, 419, 419C, 419D).

7. The heat exchange type ventilator according to claim 4 or 5, wherein opening and closing operations of the exhaust damper (216, 416), the air supply damper (217, 417), and the circulating damper (219, 419, 419C, 419D) are performed together by the damper motor (226, 423) itself.

8. The heat exchange type ventilator according to claim 4 or 5,
wherein the rotary shaft (227) on the side of the damper motor (226) and the rotary shaft (225) on the side of the integrally provided dampers (216, 416; 217, 417; 219, 419, 419C, 419D) are connected with a lever (228), and positions of the rotary shaft (227) on the side of the damper motor (226) and the rotary shaft (225) on the side of the integrally provided dampers (216, 416; 217, 417; 219, 419, 419C, 419D) are shifted.

9. The heat exchange type ventilator according to claim 4 or 5,
wherein the damper motor (226) is provided at a top surface side (229) of the flow path switching unit (222, 422).

10. The heat exchange type ventilator according to claim 4 or 5,
wherein two limit switches (231, 426a; 232, 426b) are used, and the energization of the damper motor (226) is stopped while the integrally provided dampers (216, 416; 217, 417; 219, 419, 419C, 419D) are stopped.

11. The heat exchange type ventilator according to claim 1,
comprising a containing part (233)
wherein the containing part (233) containing a controller is provided inside of the exhaust flow path (209, 409) of the flow path switching unit (222, 422) so as to be projected in a chevron shape and serve as an air guide.

## Patentansprüche

1. Ventilator vom Wärmeaustauschtyp, der aufweist:
eine Ventilationseinheit (208, 408), die einschließt:
einen Wärmetauscher (205, 405), der einen Wärmeaustausch zwischen einem Auslassfluss bzw. Abluftfluss von innen bzw. einer Innenseite und einem Luftzuführfluss von außen bzw. einer Außenseite durchführt;
ein Luftgebläse bzw. Luftblaser zum Auslassen bzw. Ablüften (206, 406), das bzw. der einen Auslassfluss bzw. Abluftfluss ausbildet; und
ein Luftgebläse bzw. Luftblaser zum Zuführen von Luft (207, 407), das bzw. der einen Luftzuführfluss ausbildet; und
eine Flusspfadschalteinheit (222, 422), die einschließt:
eine Partitionsplatte (211, 411), die in einen Auslassflusspfad bzw. Abluftflusspfad (209, 409) und einen Luftzuftihrflusspfad (210, 410) partitioniert;
einen Auslassklappenempfänger (213, 413), der eine Auslassöffnung (212, 412) einschließt, durch welche der Auslassfluss bzw. Abluftfluss passiert bzw. hindurchgelangt, und in dem Auslassflusspfad bzw. Abluftflusspfad (209, 409) bereitgestellt ist;
einen Luftzuführklappenempfänger (215, 415), der eine Luftzuführöffnung (214, 414) einschließt, durch welche der Luftzuführfluss passiert bzw. hindurchgelangt, und in dem Luftzuführflusspfad (210, 410) bereitgestellt ist; und
eine Auslassklappe (216, 416), die die Auslassöffnung (212, 412) öffnet und schließt, und eine Luftzuführklappe (217, 417), die die Luftzuführöffnung (214, 414) öffnet und schließt;
**dadurch gekennzeichnet, dass**
empfängerseitige, gebogene Abschnitte (223), an den Endabschnitten des Auslassklappenempfängers (213, 413) und des Luftzuftihrklappenempfängers (215, 415) bereitgestellt sind,
klappenseitige, gebogene Abschnitte (224), welche entlang der empfängerseitigen, gebogenen Abschnitte (223) des Auslassklappenempfängers (213, 413) und des Luftzuführklappenempfänger (215, 415) gebogen sind, an der Auslassklappe (216, 416) und der Luftzufübrklappe (217, 417) bereitgestellt sind;
eine Zirkulationsöffnung (218, 418, 418A), die an bzw. bei einer Partitionsplatte (211, 411) geöffnet ist, um mit dem Auslassflusspfad bzw. Abluftflusspfad (209, 409) und dem Luftzuführflusspfad (210, 410) zu kommunizieren;
eine Zirkulationsklappe (219, 419, 419C, 419D), die die Zirkulationsöffnung (218, 418, 418A) öffnet und schließt,
wobei die Auslassklappe (216, 416), die Luftzuführklappe (217, 417) und die Zirkulationsklappe (219, 419, 419C, 419D) an den drei Öffnungen der Auslassöffnung (212, 412) und der Luftzuführöffnung (214, 414) und der Zirkulationsöffnung (218, 418, 418A) jeweilig angeordnet sind;
wobei die Auslassklappe (216, 416) und die Luftzuführklappe (217, 417) und die Zirkulationsklappe (219, 419, 419C, 419D) integral bereitgestellt sind, und integral durch einen Rotationsschaft (225) auf einer Seite der integral bereitgestellten Klappen (216, 416; 217, 417; 219, 419, 419C, 419D) geöffnet und geschlossen werden bzw. sind.

2. Ventilator vom Wärmeaustauschtyp nach Anspruch 1,
wobei die klappenseitigen, gebogenen Abschnitte (224) in einer Richtung in welcher ein Luftfluss geführt bzw. geleitet ist jeweilig gebogen ist bzw. sind.

3. Ventilator vom Wärmeaustauschtyp nach Anspruch 1,
wobei die Auslassklappe (216, 416) und die Luftzuführklappe (217, 417) und die Zirkulationsklappe (219, 419, 419C, 419D) in Richtungen agieren bzw. funktionieren oder arbeiten, wo bzw. in welcher die Luftzuführöffnung (214, 414), die Auslassöffnung (212, 412) und die Zirkulationsöffnung (218, 418, 418A) durch einen Luftdruck des Auslassflusses und des Luftzuführflusses geschlossen sind.

4. Ventilator vom Wärmeaustauschtyp nach Anspruch 1,
wobei ein Klappenmotor (226, 423), welcher den Rotationsschaft (225) auf der Seite der integral bereitgestellten Klappen (216, 416; 217, 417; 219, 419, 419C, 419D), die die Auslassklappe (216, 416) und die Luftzuführklappe (217, 417) und die Zirkulationsklappe (219, 419, 419C, 419D) integral öffnen und schließen, treibt, innerhalb der Flusspfadschalteinheit (222, 422) bereitgestellt ist.

5. Ventilator vom Wärmeaustauschtyp nach Anspruch 4,
wobei sowohl ein Rotationsschaft (227) auf einer Seite des Klappenmotors (226, 423) als auch der Rotationsschaft (225) auf der Seite der Klappe innerhalb des Auslassflusspfades bzw. Abluftflusspfades (209, 409) bereitgestellt sind.

6. Ventilator vom Wärmeaustauschtyp nach Anspruch 4 oder 5, wobei der Klappenmotor (226, 423) von der Auslassklappe (216, 416), der Luftzuführklappe (217, 417) und der Zirkulationsklappe (219, 419, 419C, 419D) abnehmbar bzw. trennbar ist.

7. Ventilator vom Wärmeaustauschtyp nach Anspruch 4 oder 5, wobei Öffnungs- und Schließoperationen der Auslassklappe (216, 416), der Luftzuführklappe (217, 417) und der Zirkulationsklappe (219, 419, 419C, 419D) zusammen durch den Klappenmotor (226, 423) selbst durchgeführt werden.

8. Ventilator vom Wärmeaustauschtyp nach Anspruch 4 oder 5,
wobei der Rotationsschaft (227) auf der Seite des Klappenmotors (226) und der Rotationsschaft (225) auf der Seite der integral bereitgestellten Klappen (216, 416; 217, 417; 219, 419, 419C, 419D) mit einem Hebel (228) verbunden sind, und Positionen des Rotationsschafts (227) auf der Seite des Klappenmotors (226) und des Rotationsschafts (225) auf der Seite der integral bereitgestellten Klappen (216, 416; 217, 417; 219, 419, 419C, 419D) verschoben sind.

9. Ventilator vom Wärmeaustauschtyp nach Anspruch 4 oder 5,
wobei der Klappenmotor (226) an einer oberen bzw. obersten Flächenseite (229) der Flusspfadschalteinheit (226, 422) bereitgestellt ist.

10. Ventilator vom Wärmeaustauschtyp nach Anspruch 4 oder 5,
wobei zwei Begrenzungsschalter (231, 426a; 232, 426b) verwendet werden, und die Energetisierung des Klappenmotors bzw. die Energiezufuhr zum Klappenmotor (226) gestoppt bzw. beendet wird, während die integral bereitgestellten Klappen (216, 416; 217, 417; 219, 419, 419C, 419D) gestoppt bzw. beendet werden.

11. Ventilator vom Wärmeaustauschtyp nach Anspruch 1,
aufweisend einen Beinhaltungsteil (233),
wobei das Beinhaltungsteil (233), das eine Steuerung beinhaltet, innerhalb des Auslassflusspfades bzw. Abluftflusspfad (209, 409) der Flusspfadschalteinheit (222, 422) bereitgestellt ist, um so in einer Chevronform bzw. Zickzackform oder Winkelform bzw. Bogenform hervorzustehen bzw. herauszuragen und als eine Luftführung dient.

## Revendications

1. Ventilateur de type échangeur de chaleur comprenant :
une unité de ventilation (208, 408) comportant :
un échangeur de chaleur (205, 405) mettant en oeuvre un échange de chaleur entre un flux d'échappement en provenance de l'intérieur et un flux d'alimentation en air en provenance de l'extérieur ;
un souffleur d'air d'échappement (206, 406) qui forme le flux d'échappement ; et
un souffleur d'air d'alimentation en air (207, 407) qui forme le flux d'alimentation en air ; et
une unité de commutation du parcours du flux (222, 422) comportant :
une plaque de séparation (211, 411) qui sépare un parcours de flux d'échappement d'un parcours d'alimentation en air (210, 410) ;
un support de registre d'échappement (213, 413) comportant une ouverture d'échappement (212, 412) à travers laquelle passe le flux d'échappement et prévue dans le parcours du flux d'échappement (209, 409) ;
un support de registre d'alimentation en air (215, 415) comportant une ouverture d'alimentation en air (214, 414) à travers laquelle passe le flux d'alimentation en air et prévue dans le parcours du flux d'alimentation en air (210, 410) ; et
un registre d'échappement (216, 416) qui ouvre et ferme l'ouverture d'échappement (212, 412) et un registre d'alimentation en air (217, 417) qui ouvre et ferme l'ouverture d'alimentation en air (213, 414) ;
**caractérisé en ce que**
des portions courbées côté support (223) sont prévues sur les parties d'extrémité du support de registre d'échappement (213, 413) et du support de registre d'alimentation en air (215,415),
des portions courbées côté registre (224) qui sont courbées le long des portions courbées côté support (223) du support de registre d'échappement (213, 413) et du support de registre d'alimentation en air (215, 415) sont prévues sur le registre d'échappement (214, 416) et le registre d'alimentation en air (217, 417) ;
une ouverture de circulation (218, 418, 418A) ouverte au niveau de la plaque de séparation (211, 411) pour faire communiquer le parcours du flux d'échappement (209, 409) et le parcours du flux d'alimentation en air (210, 410) ;
un registre de circulation (219, 419, 419C, 419D) qui ouvre et ferme l'ouverture de circulation (218, 418, 418A),
où le registre d'échappement (216, 416), le registre d'alimentation en air (217, 417) et le registre de circulation (219, 419, 419C, 419D) sont disposés au niveau des trois ouvertures que sont respectivement l'ouverture d'échappement (212, 412) et l'ouverture d'alimentation en air (214, 414) et l'ouverture de circulation (218, 418, 418A) ; et
où le registre d'échappement (216, 416) et le registre d'alimentation en air (217, 417) et le registre de circulation (219, 419, 419C, 419D) sont prévus en une pièce et sont ouverts et fermés intégralement par un axe de rotation (225) d'un côté des registres monoblocs (216, 416;217,417;219,419,419C,419D).

2. Ventilateur de type échangeur de chaleur selon la revendication 1,
où les portions courbées côté registre (224) sont courbées chacune dans la direction dans laquelle est guidé le flux d'air.

3. Ventilateur de type échangeur de chaleur selon la revendication 1,
où le registre d'échappement (216, 416) et le registre d'alimentation en air (217, 417) et le registre de circulation (219, 419, 419C, 419D) agissent dans la direction de fermeture de l'ouverture d'alimentation en air (214, 414), l'ouverture d'échappement (212, 412) et l'ouverture de circulation (218, 418, 418A) par la pression de l'air du flux d'échappement et du flux d'alimentation en air.

4. Ventilateur de type échangeur de chaleur selon la revendication 1,
où un moteur de registre (226, 423) qui entraîne l'axe de rotation (225) du côté des registres monoblocs (216, 416 ; 217, 417 ; 219, 419, 419C, 419D) de manière à ouvrir et fermer intégralement le registre d'échappement (216, 416) et le registre d'alimentation en air (217, 417) et le registre de circulation (219, 419, 419C, 419D) est prévu à l'intérieur de l'unité de commutation du parcours du flux (222, 422).

5. Ventilateur de type échangeur de chaleur selon la revendication 4,
où un axe de rotation (227) situé sur un côté du moteur de registre (226, 423) et l'axe de rotation situé sur le côté du registre sont prévus dans le parcours du flux d'échappement (209, 409).

6. Ventilateur de type échangeur de chaleur selon la revendication 4 ou 5, où le moteur de registre (226, 423) est apte à être détaché du registre d'échappement (216, 416) du registre d'alimentation en air (217, 417) et du registre de circulation (219, 419, 419C, 419D).

7. Ventilateur de type échangeur de chaleur selon la revendication 4 ou 5, où les opérations d'ouverture et de fermeture du registre d'échappement (216, 416), du registre d'alimentation en air (217, 417) et du registre de circulation (219, 419, 419C, 419D) sont exécutées simultanément par le moteur de registre (226, 423).

8. Ventilateur de type échangeur de chaleur selon la revendication 4 ou 5,
où l'axe rotatif (227) situé du côté du moteur de registre (226) et l'axe rotatif (225) situé du côté des registres monoblocs (216, 416, 217, 417 ; 219, 419, 419C, 419D) sont connectés par un levier (228) et où les positions de l'axe rotatif (227) situé du côté du moteur de registre (226) et de l'axe rotatif (225) situé du côté des registres monoblocs (216, 416, 217, 417 ; 219, 419, 419C, 419D) sont changées.

9. Ventilateur de type échangeur de chaleur selon la revendication 4 ou 5,
où le moteur de registre (226) est prévu sur le côté supérieur d'une surface (229) de l'unité de commutation du parcours de flux (222, 422).

10. Ventilateur de type échangeur de chaleur selon la revendication 4 ou 5,
où deux interrupteurs de fin de course (231, 426a ; 232, 426b) sont utilisés et la mise sous tension du moteur de registre (226) est arrêtée tandis que les registres monoblocs (216, 416 ; 217, 417 ; 219, 419, 419C, 419D) sont arrêtés.

11. Ventilateur de type échangeur de chaleur selon la revendication 1,
comprenant une partie contenante (233)
où la partie contenante (223) contenant un contrôleur est prévue dans le parcours du flux d'échappement (209, 409) de l'unité de commutation du parcours de flux (222, 422) de telle manière qu'elle dépasse en forme de chevron et sert de déflecteur d'air.
